# EUROPEAN PATENT APPLICATION

(11) **EP 4 614 092 A1**
(43) Date of publication of application: **10.09.2025**
(21) Application number: 23914931.3
(22) Date of filing: 06.11.2023
(51) Int. Cl.: F25D 27/00, F25D 23/02, G01C 3/06, F25D 11/00

(54) **REFRIGERATOR AND CONTROLLING METHOD FOR SAME**

(30) Priority: 04.01.2023 KR 20230001426; 15.02.2023 KR 20230020349
(71) Applicant: Samsung Electronics Co., Ltd., Suwon-si, Gyeonggi-do 16677 (KR)
(72) Inventor: PARK, Hosang, Suwon-si Gyeonggi-do 16677 (KR); LEE, Jaejin, Suwon-si Gyeonggi-do 16677 (KR); JEE, Yongkeun, Suwon-si Gyeonggi-do 16677 (KR); KANG, Mijo, Suwon-si Gyeonggi-do 16677 (KR); NA, Kyungwon, Suwon-si Gyeonggi-do 16677 (KR); SEONG, Hyeonuk, Suwon-si Gyeonggi-do 16677 (KR)
(74) Representative: Gulde & Partner
(86) International application number: PCT/KR2023/017635
(87) International publication number: WO 2024/147467

(57) **Abstract**

A refrigerator and a controlling method for same are provided. The refrigerator comprises: a main body forming a storage compartment; a door for opening and closing the storage compartment, the door comprising a light-transmitting panel capable of transmitting light and a door frame formed along the edge of the light-transmitting panel and supporting the light-transmitting panel; a light source provided in the storage compartment; a distance sensor mounted on the door frame and provided to sense the distance to an object located in front of the door when the door closes the storage compartment; and a processor electrically connected to the distance sensor and light source and controlling the light source to emit light on the basis of the output value of the distance sensor being less than or equal to a reference distance.

## Description

### [Technical Field]

The present disclosure relates to a refrigerator and a control method of the refrigerator.

### [Background Art]

A refrigerator is a device that is composed of a main body including a storage compartment, and a cold air supply system configured to supply cold air to the storage compartment so as to keep food fresh. The storage compartment includes a refrigerating compartment in which food is kept refrigerated by maintaining the temperature at approximately 0 to 5 degrees Celsius, and a freezing compartment in which food is kept frozen by maintaining the temperature at approximately -30 to 0 degrees Celsius. A front surface of the storage compartment is provided to be open for entry and withdrawal of food, and the front surface of the storage compartment is opened and closed by a door.

The refrigerator uses a compressor, a condenser, an expander, and an evaporator to repeat a refrigeration cycle of compressing, condensing, expanding, and evaporating a refrigerant. At this time, both the freezing compartment and the refrigerating compartment may be cooled by a single evaporator disposed on the freezing compartment, or the freezing compartment and the refrigerating compartment may each be provided with the evaporator and thus cooled independently of each other.

The refrigerator may include a light source configured to emit light to the storage compartment to easily check food inside the storage compartment when the storage compartment is opened. The refrigerator may include a door opening and closing sensor that detects whether the storage compartment is opened by a door. Accordingly, the refrigerator may allow the light source to be turned on when the door opens the storage compartment, and the refrigerator may allow the light source to be turned off when the door closes the storage compartment.

### [Disclosure]

### [Technical Problem]

The present disclosure is directed to providing a refrigerator including an improved structure capable of checking an inside of a storage compartment without opening the storage compartment, and a control method thereof.

The present disclosure is directed to providing a refrigerator including an improved structure capable of preventing cold air from leaking from a storage compartment when a user checks an inside of the storage compartment, and capable of improving cooling efficiency, and a control method thereof.

The present disclosure is directed to providing a refrigerator including an improved structure capable of checking an inside of a storage compartment without touching a door or operating other input devices, and a control method thereof.

The present disclosure is directed to providing a refrigerator including an improved structure capable of detecting approach of a user when the user is located within a predetermined distance, and a control method thereof.

The present disclosure is directed to providing a refrigerator including an improved structure capable of efficiently detecting a user's approach while reducing the number of components of the product, and a control method thereof.

The present disclosure is directed to providing a refrigerator including an improved structure capable of preventing a detection region from being interfered with by a structure such as a door, and a control method thereof.

The present disclosure is directed to providing a refrigerator including an improved structure capable of increasing efficiency of a space occupied by a distance sensor mounted on a door, and a control method thereof.

The present disclosure is directed to providing a refrigerator including a structure in which arrangement of a distance sensor is improved so as to improve appearance quality of the product, and a control method thereof.

The present disclosure is directed to providing a refrigerator including an improved structure capable of increasing detection accuracy of a distance sensor, and a control method thereof.

The present disclosure is directed to providing a refrigerator including an improved structure capable of allowing a distance sensor to be stably fixed to a door, and a control method thereof.

The present disclosure is directed to providing a refrigerator including an improved structure capable of reducing power consumption, and a control method thereof.

The present disclosure is directed to providing a refrigerator capable of determining whether an error occurs in detection of a distance sensor, and a control method thereof.

Additional aspects of the disclosure will be set forth in part in the description which follows and, in part, will be obvious from the description, or may be learned by practice of the disclosure.

### [Technical Solution]

According to an embodiment of the present disclosure, a refrigerator include: a main body forming a storage compartment; a door configured to open and close the storage compartment, the door including a light-transmitting panel configured to transmit light, and a door frame formed along an edge of the light-transmitting panel and provided to support the light-transmitting panel; a light source provided in the storage compartment; a distance sensor mounted on the door frame and configured to detect a distance to an object located in front of the door in response to the door closing the storage compartment; and a processor electrically connected to the distance sensor and the light source and configured to control the light source to emit light based on an output value of the distance sensor being less than or equal to a reference distance.

According to an embodiment of the present disclosure, a refrigerator including: a main body forming a storage compartment; at least one door configured to open and close the storage compartment, the door including a light-transmitting panel configured to transmit light into and out of the storage compartment in response to the at least one door closing the storage compartment; a light source provided in the storage compartment; a distance sensor configured to detect a distance to an object located in front of the at least one door in response to the storage compartment being closed, and mounted on an edge of one door of the at least one door; and a processor electrically connected to the distance sensor and the light source, and configured to control the light source to emit light to the light-transmitting panel based on an output value of the distance sensor being less than or equal to a reference distance.

According to an embodiment of the present disclosure, a control method of a refrigerator including a door including a light-transmitting panel configured to transmit light into and out of a storage compartment in response to the door closing the storage compartment, the control method of the refrigerator including: emitting detection light to a front side of the refrigerator using a distance sensor mounted on a lower edge of the door in response to the door closing the storage compartment; determining whether a distance from the distance sensor to an object is less than or equal to a reference distance based on the detection light, which is reflected by the object located in front of the refrigerator, being detected by the distance sensor; and emitting light to the light-transmitting panel using a light source provided in the storage compartment based on the distance, which is from the distance sensor to the object, being less than or equal to the reference distance.

### [Description of Drawings]

FIG. 1 is a front view of a refrigerator according to one embodiment of the present disclosure.
FIG. 2 is a perspective view of the refrigerator according to one embodiment of the present disclosure.
FIG. 3 is a view illustrating a coupling structure of a door and a main body of the refrigerator according to one embodiment of the present disclosure.
FIG. 4 is a view illustrating a portion of a configuration of the door of the refrigerator according to one embodiment of the present disclosure.
FIG. 5 is a cross-sectional side view illustrating a portion of a configuration of the refrigerator according to one embodiment of the present disclosure.
FIG. 6 is a block diagram illustrating a portion of the configuration of the refrigerator according to one embodiment of the present disclosure.
FIG. 7 is an exploded view illustrating the door of the refrigerator according to one embodiment of the present disclosure.
FIG. 8 is a cross-sectional view illustrating the door of the refrigerator according to one embodiment of the present disclosure.
FIG. 9 is a view illustrating a state in which a distance sensor of the refrigerator according to one embodiment of the present disclosure is disassembled from the door.
FIG. 10 is a front view schematically illustrating a region detected by the distance sensor of the refrigerator according to one embodiment of the present disclosure.
FIG. 11 is a side view schematically illustrating the region detected by the distance sensor of the refrigerator according to one embodiment of the present disclosure.
FIG. 12 is a flowchart illustrating a control method of the refrigerator according to one embodiment of the present disclosure.
FIG. 13 is a flowchart illustrating a control method of the refrigerator according to one embodiment of the present disclosure.
FIG. 14 is a view illustrating a state in which the door of the refrigerator according to one embodiment of the present disclosure is in a light-transmitting mode.
FIG. 15 is an exploded view illustrating a configuration of the distance sensor of the refrigerator according to one embodiment of the present disclosure.
FIG. 16 is an exploded view illustrating the configuration of the distance sensor of the refrigerator according to one embodiment of the present disclosure.
FIG. 17 is a cross-sectional view illustrating a portion of the configuration of the refrigerator according to one embodiment of the present disclosure.
FIG. 18 is a cross-sectional view illustrating a portion of the configuration of the refrigerator according to one embodiment of the present disclosure.
FIG. 19 is an enlarged view of a portion of a refrigerator according to one embodiment of the present disclosure.
FIG. 20 is an exploded view illustrating a configuration of a distance sensor of the refrigerator according to one embodiment of the present disclosure.
FIG. 21 is a cross-sectional view illustrating a portion of a configuration of the refrigerator according to one embodiment of the present disclosure.
FIG. 22 is a cross-sectional view illustrating a portion of the configuration of the refrigerator according to one embodiment of the present disclosure.
FIG. 23 is an exploded view illustrating a portion of the configuration of the refrigerator according to one embodiment of the present disclosure, when viewed from the rear.

### [Modes of the Invention]

Various embodiments of the disclosure and terms used herein are not intended to limit the technical features described herein to specific embodiments, and should be understood to include various modifications, equivalents, or substitutions of the corresponding embodiments.

In describing of the drawings, similar reference numerals may be used for similar or related elements.

The singular form of a noun corresponding to an item may include one or more of the items unless clearly indicated otherwise in a related context.

In the disclosure, phrases, such as "A or B", "at least one of A and B", "at least one of A or B", "A, B or C", "at least one of A, B and C", and "at least one of A, B, or C" may include any one or all possible combinations of the items listed together in the corresponding phrase among the phrases.

As used herein, the term "and/or" includes any and all combinations of one or more of the associated listed items.

Terms such as "1st", "2nd", "primary", or "secondary" may be used simply to distinguish an element from other elements, without limiting the element in other aspects (e.g., importance or order).

Further, as used in the disclosure, the terms "front", "rear", "top", "bottom", "side", "left", "right", "upper", "lower", and the like are defined with reference to the drawings, and are not intended to limit the shape and position of any element.

It will be understood that when the terms "includes", "comprises", "including", and/or "comprising" are used in the disclosure, they specify the presence of the specified features, figures, steps, operations, components, members, or combinations thereof, but do not preclude the presence or addition of one or more other features, figures, steps, operations, components, members, or combinations thereof.

When a given element is referred to as being "connected to", "coupled to", "supported by" or "in contact with" another element, it is to be understood that it may be directly or indirectly connected to, coupled to, supported by, or in contact with the other element. When a given element is indirectly connected to, coupled to, supported by, or in contact with another element, it is to be understood that it may be connected to, coupled to, supported by, or in contact with the other element through a third element.

It will also be understood that when an element is referred to as being "on" another element, it may be directly on the other element or intervening elements may also be present.

A refrigerator according to an embodiment of the disclosure may include a main body.

The "main body" may include an inner case, an outer case positioned outside the inner case, and an insulation provided between the inner case and the outer case.

The "inner case" may include a case, a plate, a panel, or a liner forming a storage compartment (also referred to as a storage room). The inner case may be formed as one body, or may be formed by assembling a plurality of plates together. The "outer case" may form an appearance of the main body, and be coupled to an outer side of the inner case such that the insulation is positioned between the inner case and the outer case.

The "insulation" may insulate an inside of the storage compartment from an outside of the storage compartment to maintain inside temperature of the storage compartment at appropriate temperature without being influenced by an external environment of the storage compartment. According to an embodiment of the disclosure, the insulation may include a foaming insulation. The foaming insulation may be molded by fixing the inner case and the outer case with jigs, etc. and then injecting and foaming urethane foam as a mixture of polyurethane and a foaming agent between the inner case and the outer case.

According to an embodiment of the disclosure, the insulation may include a vacuum insulation in addition to a foaming insulation, or may be configured only with a vacuum insulation instead of a forming insulation. The vacuum insulation may include a core material and a cladding material accommodating the core material and sealing the inside with vacuum or pressure close to vacuum. However, the insulation is not limited to the above-mentioned foaming insulation or vacuum insulation, and may include various materials capable of being used for insulation.

The "storage compartment" may include a space defined by the inner case. The storage compartment may further include the inner case defining the space corresponding to the storage compartment. The storage compartment may store a variety of items, such as food, medicines, cosmetics, and the like, and the storage compartment may be configured to be open on at least one side for insertion and removal of the items.

The refrigerator may include one or more storage compartments. In a case in which two or more storage compartments are formed in the refrigerator, the respective storage compartments may have different purposes of use, and may be maintained at different temperatures. To this end, the respective storage compartments may be partitioned by a partition wall including an insulation.

The storage compartment may be maintained within an appropriate temperature range according to a purpose of use, and may include a "refrigerating compartment", a "freezing compartment", and a "temperature conversion compartment" according to purposes of use and/or temperature ranges. The refrigerating compartment may be maintained at an appropriate temperature to keep food refrigerating, and the freezing compartment may be maintained at an appropriate temperature to keep food frozen. The "refrigerating" may be keeping food cold without freezing the food, and for example, the refrigerating compartment may be maintained within a range of 0 degrees Celsius to 7 degrees Celsius. The "freezing" may be freezing food or keeping food frozen, and for example, the freezing compartment may be maintained within a range of -20 degrees Celsius to -1 degrees Celsius. The temperature conversion compartment may be used as either a refrigerating compartment or a freezing compartment according to or regardless of a user's selection.

The storage compartment may also be referred to by various terms, such as "vegetable compartment", "freshness compartment", "cooling compartment", and "ice-making compartment", in addition to "refrigerating compartment", "freezing compartment", and "temperature conversion compartment", and the terms, such as "refrigerating compartment", "freezing compartment", "temperature conversion compartment", etc., as used below are to be understood as representing storage compartments having the corresponding purposes of use and the corresponding temperature ranges.

The refrigerator according to an embodiment of the disclosure may include at least one door configured to open or close the open side of the storage compartment. The respective doors may be provided to open and close one or more storage compartments, or a single door may be provided to open and close a plurality of storage compartments. The door may be rotatably or slidably mounted to the front of the main body.

The "door" may seal the storage compartment in a closed state. The door, like the main body, may include an insulation to insulate the storage compartment in a closed state.

According to an embodiment, the door may include an outer door plate forming the front surface of the door, an inner door plate forming the rear surface of the door and facing the storage compartment, an upper cap, a lower cap, and a door insulation provided therein.

A gasket may be provided on the edge of the inner door plate to seal the storage compartment by coming into close contact with the front surface of the main body when the door is closed. The inner door plate may include a dyke that protrudes rearward to allow a door basket for storing items to be fitted.

According to an embodiment, the door may include a door body and a front panel that is detachably coupled to the front of the door body and forming the front surface of the door. The door body may include an outer door plate forming the front surface of the door body, an inner door plate forming the rear surface of the door body and facing the storage compartment, an upper cap, a lower cap, and a door insulator provided therein.

The refrigerator may be classified as French Door Type, Side-by-side Type, Bottom Mounted Freezer (BMF), Top Mounted Freezer (TMF), or Single Door Refrigerator according to the arrangement of the doors and the storage compartments.

The refrigerator according to an embodiment of the disclosure may include a cold air supply device for supplying cold air to the storage compartment.

The "cold air supply device" may include a machine, an apparatus, an electronic device, and/or a combination system thereof, capable of generating cold air and guiding the cold air to cool the storage compartment.

According to an embodiment of the disclosure, the cold air supply device may generate cold air through a cooling cycle including compression, condensation, expansion, and evaporation processes of refrigerants. To this end, the cold air supply device may include a refrigeration cycle device having a compressor, a condenser, an expander, and an evaporator to drive the refrigeration cycle. According to an embodiment of the disclosure, the cold air supply device may include a semiconductor, such as a thermoelectric element. The thermoelectric element may cool the storage compartment by heating and cooling actions through the Peltier effect.

The refrigerator according to an embodiment of the disclosure may include a machine compartment in which at least some components belonging to the cold air supply device are installed.

The "machine compartment" may be partitioned and insulated from the storage compartment to prevent heat generated by the components installed in the machine compartment from being transferred to the storage compartment. To dissipate heat from the components installed in the machine compartment, the machine compartment may communicate with outside of the main body.

The refrigerator according to an embodiment of the disclosure may include a dispenser provided on the door to provide water and/or ice. The dispenser may be provided on the door to allow access by the user without opening the door.

The refrigerator according to an embodiment of the disclosure may include an ice-making device that produces ice. The ice-making device may include an ice-making tray that stores water, an ice-moving device that separates ice from the ice-making tray, and an ice-bucket that stores ice produced in the ice-making tray.

The refrigerator according to an embodiment of the disclosure may include a controller for controlling the refrigerator.

The "controller" may include a memory for storing and/or recording data and/or programs for controlling the refrigerator, and a processor for outputting control signals for controlling the cold air supply device, etc. in accordance with the programs and/or data stored in the memory.

The memory may store or record various information, data, instructions, programs, and the like necessary for operation of the refrigerator. The memory may store temporary data generated while generating control signals for controlling components included in the refrigerator. The memory may include at least one of a volatile memory or a non-volatile memory, or a combination thereof.

The processor may control the overall operation of the refrigerator. The processor may control the components of the refrigerator by executing programs stored in memory. The processor may include a separate neural processing unit (NPU) that performs an artificial intelligence (AI) model operation. In addition, the processor may include a central processing unit (CPU), a graphics processor (GPU), and the like. The processor may generate a control signal to control the operation of the cold air supply device. For example, the processor may receive temperature information of the storage compartment from a temperature sensor and generate a cooling control signal to control an operation of the cold air supply device based on the temperature information of the storage compartment.

Furthermore, the processor may process a user input of a user interface and control an operation of the user interface in accordance with the programs and/or data memorized/stored in the memory. The user interface may be provided with an input interface and an output interface. The processor may receive the user input from the user interface. In addition, the processor may transmit a display control signal and image data for displaying an image on the user interface to the user interface in response to the user input.

The processor and memory may be provided integrally or may be provided separately. The processor may include one or more processors. For example, the processor may include a main processor and at least one sub-processor. The memory may include one or more memories.

The refrigerator according to an embodiment of the disclosure may include a processor and a memory for controlling all of the components included in the refrigerator, and may include a plurality of processors and a plurality of memories for individually controlling the components of the refrigerator. For example, the refrigerator may include a processor and a memory for controlling the operation of the cold air supply device in accordance with to an output of the temperature sensor. In addition, the refrigerator may be separately provided with a processor and a memory for controlling the operation of the user interface in accordance with the user input.

A communication module may communicate with external devices, such as servers, mobile devices, and other home appliances via a nearby access point (AP). The AP may connect a local area network (LAN) to which a refrigerator or a user device is connected to a wide area network (WAN) to which a server is connected. The refrigerator or the user device may be connected to the server via the WAN.

The input interface may include keys, a touch screen, a microphone, and the like. The input interface may receive the user input and pass the received user input to the processor.

The output interface may include a display, a speaker, and the like. The output interface may output various notifications, messages, information, and the like generated by the processor.

Hereinafter, various embodiments according to the disclosure will be described in detail with reference to the accompanying drawings.

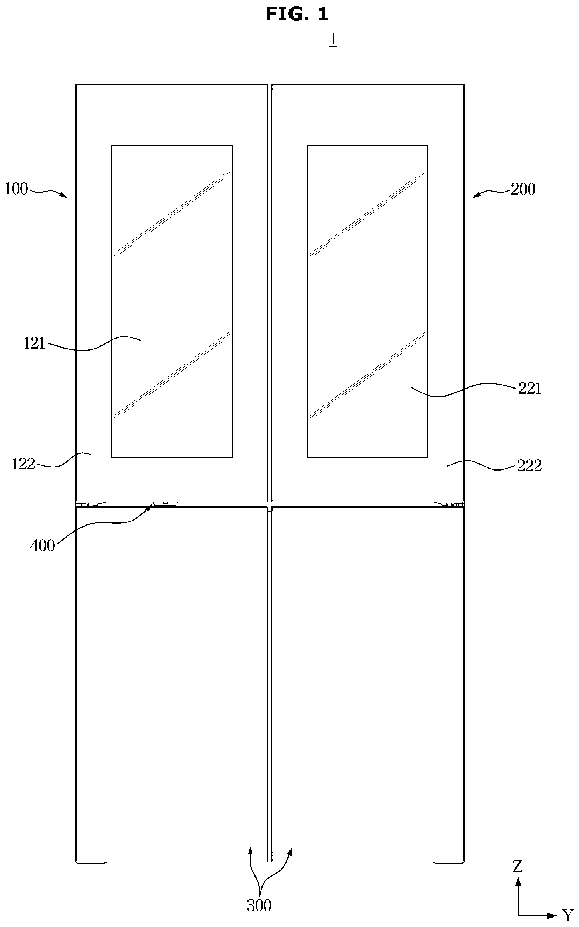

When describing various embodiments of the present disclosure with reference to FIGS. 1 to 23, the terms "front", "rear", "upper", "lower", "left", "right", etc. used in the following description are defined based on the drawings, and the shape and position of each component are not limited by these terms. For example, the terms "front" and "rear" below may mean a front side and a rear side in the X direction, respectively, based on the drawings. The terms "upper" and "lower" below may mean an upper side in the Z direction and a lower side in the Z direction, respectively, based on the drawings. The terms "left" and "right" below may mean a left side in the Y direction and a right side in the Y direction, respectively, based on the drawings.

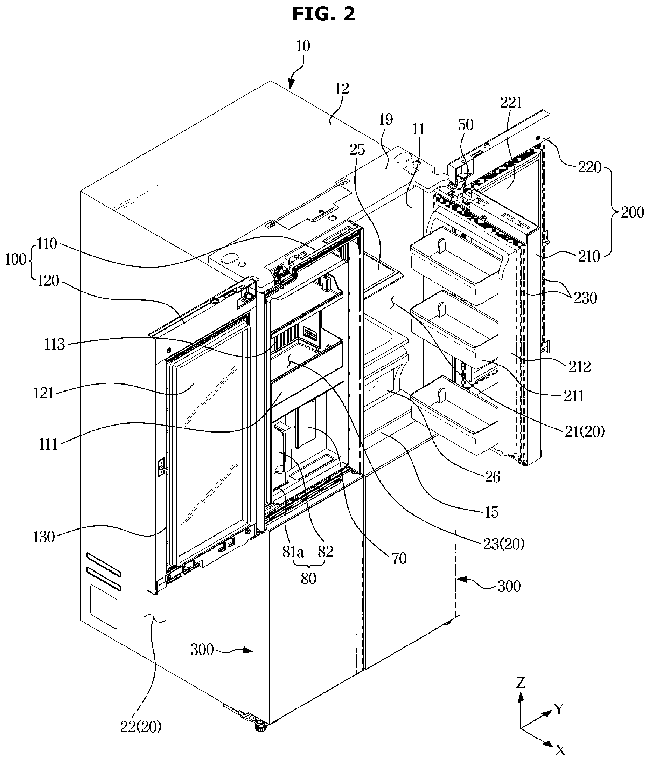

FIG. 1 is a front view of a refrigerator according to one embodiment of the present disclosure. FIG. 2 is a perspective view of the refrigerator according to one embodiment of the present disclosure.

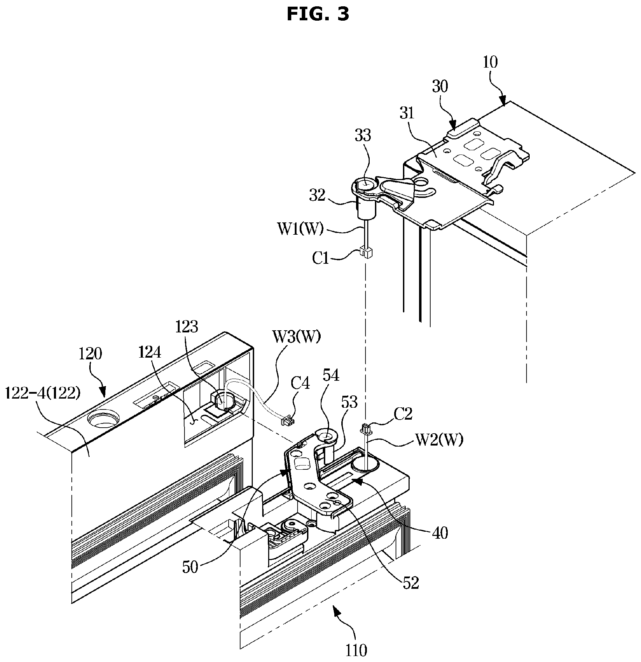

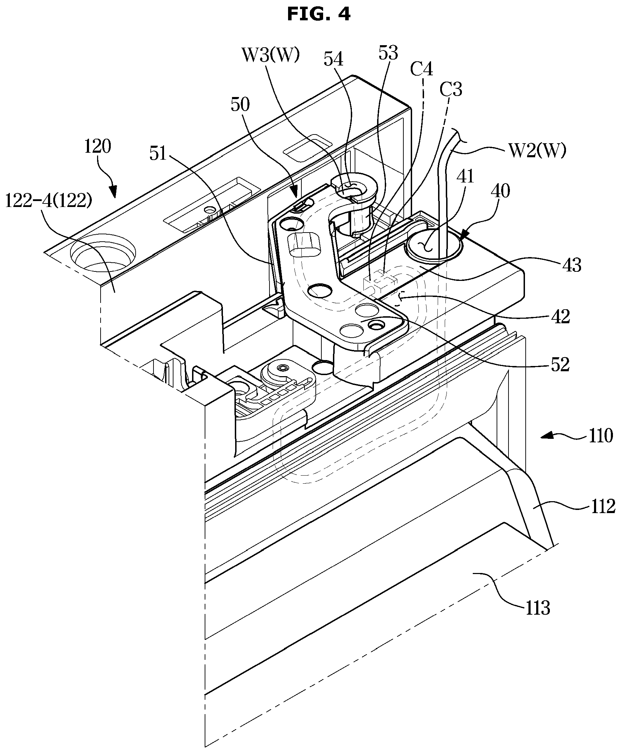

For convenience of description, FIG. 2 illustrates that a first outer door 120 of a first door 100 is separated from a first inner door 110, and the first outer door 120 may be coupled to the first inner door 110 by a second hinge 50 as shown in FIGS. 3 and 4.

As illustrated in FIGS. 1 and 2, a refrigerator 1 according to one embodiment of the present disclosure may include a main body 10, a storage compartment 20 provided inside the main body 10, doors 100, 200, and 300 configured to open and close the storage compartment 20, and a cooling system for supplying cold air to the storage compartment 20.

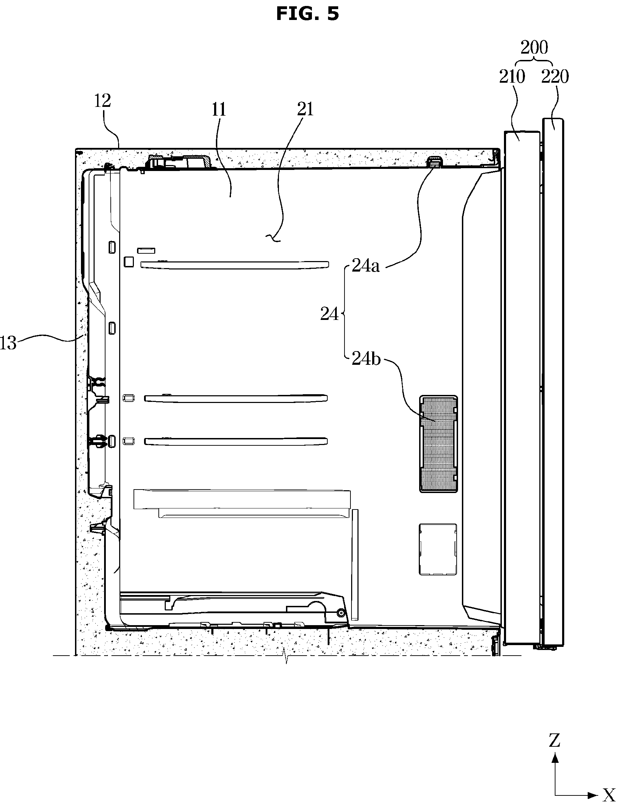

The main body 10 may include an inner case 11 forming the storage compartment 20, an outer case 12 forming an exterior of the refrigerator 1, and a main body insulating material 13 (refer to FIG. 5) disposed between the inner case 11 and the outer case 12.

The outer case 12 may be formed to have a substantially box shape in which a front surface is open. The outer case 12 may form an upper surface, a lower surface, left and right surfaces, and a rear surface of the refrigerator 1.

At least some of the upper surface, the lower surface, the rear surface, and the left and right surfaces of the outer case 12 may be formed integrally with each other. For example, the upper surface and the left and right surfaces of the outer case 12 may be formed integrally with each other.

The outer case 12 may be provided to include a metal material. For example, the outer case 12 may be manufactured by processing a steel plate material.

However, the present disclosure is not limited thereto, and the outer case 12 may be formed in various ways.

A front surface of the inner case 11 may be open. The storage compartment 20 may be formed inside the inner case 11, and the inner case 11 may be formed on an inner side of the outer case 12. An inner wall of the inner case 11 may form an inner wall of the storage compartment 20.

The inner case 11 may be formed to include a plastic material. For example, the inner case 11 may be manufactured by a vacuum forming process. For example, the inner case 11 may be manufactured by an injection molding process.

The main body insulating material 13 may be provided between the inner case 11 and the outer case 12 to insulate the inner case 11 and the outer case 12. The main body insulating material 13 may be foamed between the inner case 11 and the outer case 12 to couple the inner case 11 and the outer case 12 to each other. The main body insulating material 13 may prevent heat exchange between the inside of the storage compartment 20 and the outside of the main body 10, thereby improving the cooling efficiency inside the storage compartment 20.

Urethane foam insulation, expanded polystyrene (EPS) insulation, vacuum insulation panel, etc. may be used as the main body insulating material 13 provided in the main body 10. However, the present disclosure is not limited thereto, and the main body insulating material 13 may be composed of various materials.

The storage compartment 20 may be formed inside the main body 10. For example, the storage compartment 20 may include a refrigerating compartment in which food is kept refrigerated by maintaining the temperature at approximately 0 to 5 degrees Celsius. The storage compartment 20 may include a freezing compartment in which food is kept frozen by maintaining the temperature at approximately -30 to 0 degrees Celsius.

For example, the storage compartment 20 may be divided into a plurality of spaces by a horizontal partition 15. The storage compartment 20 may be divided into a first storage compartment 21 in an upper portion, and a second storage compartment 22 in a lower portion by the horizontal partition 15. Although not shown, the second storage compartment 22 may be divided into a lower left storage compartment, and a lower right storage compartment by a vertical partition (not shown).

For example, the upper storage compartment 21 may be used as a refrigerating compartment, and the lower storage compartment 22 may be used as a freezing compartment. However, the division and use of the storage compartments 21 and 22 as described above are only an example and are not limited thereto.

A shelf 25, on which food is placed, and a drawer 26, in which food is stored, may be provided in the storage compartment 20.

The refrigerator 1 may include the cooling system that is configured to generate cold air using a cooling cycle and configured to supply the generated cold air to the storage compartment 20. The cooling system may generate cold air using the cooling cycle that compresses, condenses, expands, and evaporates a refrigerant. For example, the cooling system may include a compressor, a condenser, an expansion valve, an evaporator, and a blower fan.

The main body 10 may include a cold air supply duct that forms a cold air path through which cold air generated by the cooling system flows into the storage compartment 20. The cold air supply duct may be formed in a rear portion of the inner case 11. The cold air supply duct may be provided in a rear portion of the storage compartment 20 and communicate with the storage compartment 20.

The doors 100, 200, and 300 may be configured to open and close the storage compartment 20. The doors 100, 200, and 300 may be configured to be rotatable with respect to the main body 10.

Outer surfaces of the doors 100, 200, and 300 may form a portion of the exterior of the refrigerator 1. In a closed position of the doors 100, 200, and 300, an outer surface of the doors 100, 200, and 300 may form at least a portion of an exterior of a front surface of the refrigerator 1. In the closed position of the doors 100, 200, and 300, the outer surface of the doors 100, 200, and 300 may form the front surface of the doors 100, 200, and 300.

In the closed position of the doors 100, 200, and 300, inner surfaces of the doors 100, 200, and 300 may form rear surfaces of the doors 100, 200, and 300. In the closed position of the doors 100, 200, and 300, the inner surfaces of the doors 100, 200, and 300 may be arranged to cover the front surface of the storage compartment 20.

The refrigerator 1 may include the plurality of doors 100, 200, and 300 configured to open and close each storage compartments 21 and 22, which are partitioned from each other.

For example, the first storage compartment 21 may be opened and closed by a pair of doors 100 and 200. The pair of doors 100 and 200 may include a first door 100 coupled to the left side of the main body 10, and a second door 200 coupled to the right side of the main body 10. The first door 100 and the second door 200 may be arranged side by side in the left and right direction (Y direction) and configured to be rotatable relative to the main body 10 to open and close the first storage compartment 21. In other words, the first door 100 may open and close the left portion of the first storage compartment 21, and the second door 200 may open and close the right portion of the first storage compartment 21.

The first door 100 may include the first inner door 110, and the first outer door 120. The first inner door 110 may be provided rotatably on the main body 10. The first outer door 120 may be provided rotatably on the first inner door 110. When both the first inner door 110 and the first outer door 120 are closed, the first outer door 120 may cover a front surface of the first inner door 110. The first outer door 120 may also be rotated relative to the first inner door 110 to open the front surface of the first inner door 110.

The first inner door 110 may be rotatably coupled to the main body 10. The refrigerator 1 may include a first hinge 30 connecting the first inner door 110 and the main body 10.

The first outer door 120 may be rotatably coupled to the first inner door 110. The refrigerator 1 may include the second hinge 50 connecting the first outer door 120 and the first inner door 110.

A foam space may be formed inside the first inner door 110, and a door insulating material (not shown) may be foamed in the foam space. The door insulating material may prevent heat exchange between the outer surface and the inner surface of the first inner door 110. The door insulating material may improve insulation performance between the inside and the outside of the first storage compartment 21.

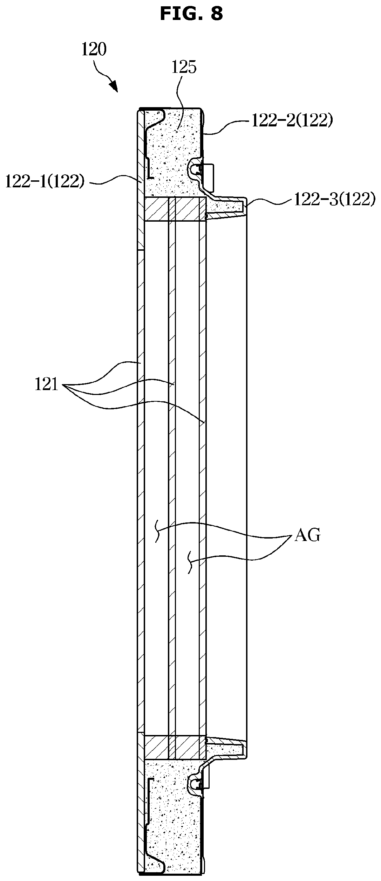

A foam space may be formed inside the first outer door 120, and a door insulating material 125 (refer to FIG. 8) may be foamed in the foam space. The door insulating material may prevent heat exchange between the outer surface and the inner surface of the first outer door 120. The door insulating material may improve insulation performance between the inside and the outside of the first storage compartment 21.

Urethane foam insulation, expanded polystyrene (EPS) insulation, vacuum insulation panel, etc. may be used as the door insulating material. However, the present disclosure is not limited thereto, and the door insulating material may be composed of various materials.

For example, the door insulating material may be composed of insulating material that is the same as a material of the main body insulating material 13. Alternatively, the door insulating material may be composed of insulating material that is different from the material of the main body insulating material 13.

A door basket 111 for storing food, etc. may be provided on the first inner door 110. A dike 112 (refer to FIG. 4) protruding rearwardly to support the door basket 111 may be formed on the first inner door 110.

The first inner door 110 may include a door partition 113 provided to define a space formed on the inner side of the first inner door 110, and the first storage compartment 21. The door partition 113 may form a back surface of the first inner door 110. A third storage compartment 23 may be formed on the inner side of the first inner door 110 to store food, and the third storage compartment 23 may be divided from the first storage compartment 21 by the door partition 113.

When the first inner door 110 closes the first storage compartment 21, the door partition 113 may be located at a left front side of the first storage compartment 21 and at a rear side of the third storage compartment 23.

The third storage compartment 23 may be provided to communicate with the first storage compartment 21. Accordingly, the third storage compartment 23 may have approximately the same temperature as the first storage compartment 21. For example, the third storage compartment 23 may be used as a refrigerating compartment in which food is kept refrigerated.

The door partition 113 may cover a rear side of the door basket 111. The door partition 113 may be coupled to the dike 112.

For example, the door partition 113 may be provided to transmit light. The door partition 113 may be configured to include various materials that transmits light, such as transparent glass and transparent plastic. Accordingly, as described below, when the refrigerator 1 according to one embodiment operates in a light-transmitting mode, a user can see the inside of the first storage compartment 21 through the door partition 113.

In the upper portion of the refrigerator 1, the third storage compartment 23 may be provided separately from the first storage compartment 21 with the above-mentioned configuration, and thus a user can efficiently utilize the food storage space.

Water supply devices 70 and 80 described below may be provided in the first inner door 110. The water supply devices 70 and 80 may be provided in the third storage compartment 23.

A first door gasket 130 may be provided on the back surface of the first inner door 110 to seal a gap between the first inner door 110 and the main body 10 so as to prevent cold air from leaking from the first storage compartment 21.

In addition, the first door gasket 130 may be provided on the back surface of the first outer door 120 to seal the gap between the first outer door 120 and the first inner door 110 so as to prevent cold air from leaking from the third storage compartment 23.

The first door gasket 130 may be provided along a perimeter of each of the back surface of the first inner door 110 and the back surface of the first outer door 120. The first door gasket 130 may be provided to include an elastic material such as rubber.

The second door 200 may include a second inner door 210, and a second outer door 220. The second inner door 210 may be rotatably provided on the main body 10. The second outer door 220 may be rotatably provided on the second inner door 210. When both the second inner door 210 and the second outer door 220 are closed, the second outer door 220 may cover a front surface of the second inner door 210. The second outer door 220 may also be rotated relative to the second inner door 210 to open the front surface of the second inner door 210.

The second inner door 210 may be rotatably coupled to the main body 10. The refrigerator 1 may include the first hinge 30 connecting the second inner door 210 and the main body 10.

The second outer door 220 may be rotatably coupled to the second inner door 210. The refrigerator 1 may include the second hinge 50 connecting the second outer door 220 and the second inner door 210.

A foam space may be formed inside the second inner door 210, and a door insulating material (not shown) may be foamed in the foam space. The door insulating material may prevent heat exchange between the outer surface and the inner surface of the second inner door 210. The door insulating material may improve insulation performance between the inside and the outside of the first storage compartment 21.

A foam space may be formed inside the second outer door 220, and a door insulating material (not shown) may be foamed in the foam space. The door insulating material may prevent heat exchange between an outer surface and an inner surface of the second outer door 220. The door insulating material may improve insulation performance between the inside and the outside of the first storage compartment 21.

Urethane foam insulation, expanded polystyrene (EPS) insulation, vacuum insulation panel, etc. may be used as the door insulating material. However, the present disclosure is not limited thereto, and the door insulating material may be composed of various materials.

For example, the door insulating material may be composed of insulating material of the same material as the main body insulating material 13. Alternatively, the door insulating material may be composed of insulating material of a different material from the main body insulating material 13.

The second inner door 210 may include an opening formed therein. The second outer door 220 may be configured to be rotatable relative to the second inner door 210 so as to open and close the opening of the second inner door 210.

A door basket 211 for storing food, etc. may be provided on the back surface of the second inner door 210. A dike 212 protruding rearwardly to support the door basket 211 may be formed on the second inner door 210.

For example, the door basket 211 may be provided to transmit light. The door basket 211 may be configured to include various materials that transmits light, such as transparent glass and transparent plastic. Accordingly, as described below, when the refrigerator 1 according to one embodiment operates in the light-transmitting mode, a user can see the inside of the first storage compartment 21 through the door basket 211.

A second door gasket 230 may be provided on the back surface of the second inner door 210 to seal a gap between the second inner door 210 and the main body 10 so as to prevent cold air from leaking from the first storage compartment 21.

Further, the second door gasket 230 may be provided on the back surface of the second outer door 220 to seal a gap between the second outer door 220 and the second inner door 210 so as to prevent cold air from leaking from the first storage compartment 21.

The second door gasket 230 may be provided along a perimeter of each of the back surface of the second inner door 210 and the back surface of the second outer door 220. The second door gasket 230 may be provided to include an elastic material such as rubber.

A hinge cover 19 may be provided on the upper surface of the main body 10. The hinge cover 19 may cover the upper portion of the first hinge 30 to prevent the first hinge 30 from being exposed to the outside.

For example, the second storage compartment 23 may be opened and closed by the third door 300. Although it is illustrated that a pair of third doors 300 are rotatably coupled to the main body 10 to open and close the second storage compartment 23, the present disclosure is not limited thereto. For example, the third door 300 may be configured as a single door that opens and closes the second storage compartment 23. Alternatively, the third door 300 may be configured as a sliding door that is configured to be movable in a sliding manner relative to the main body 10 to open and close the second storage compartment 23.

The refrigerator 1 may include the water supply devices 70 and 80 configured to provide water to a user. The water supply devices 70 and 80 may receive water from an external water source (not shown) and provide water to a user. Particularly, a water tank (not shown) may be provided inside the storage compartment 20, and water supplied to the water supply devices 70 and 80 may be cooled while stored in the water tank.

For example, the water supply device of the refrigerator 1 may include a dispenser 70. The dispenser 70 may be configured to supply water while a lever is pressed.

For example, the water supply device of the refrigerator 1 may include an automatic water supply assembly 80.

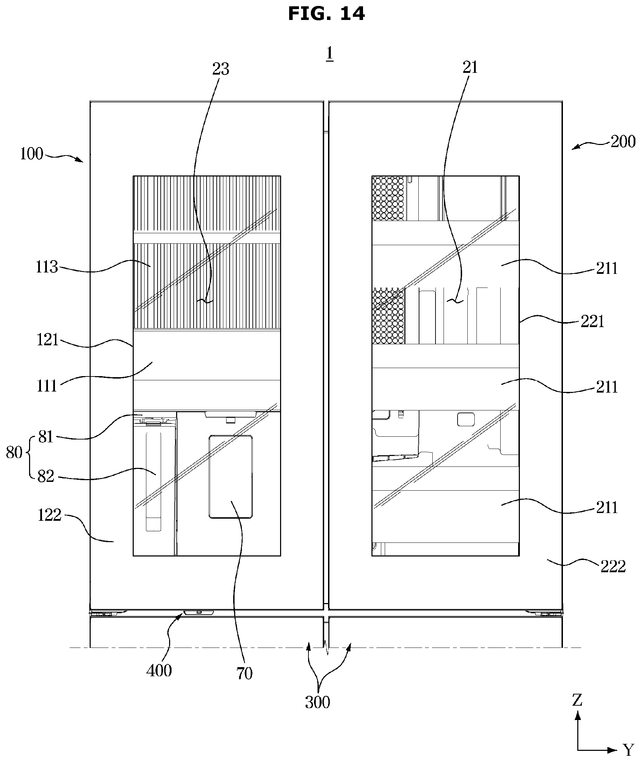

The automatic water supply assembly 80 may include a water supply portion 81 (refer to FIG. 14) and a water tank 82. The water supply portion 81 may be configured to supply water supplied from an external water source (not shown) to the water tank 82. The water tank 82 may store water supplied from the water supply portion 81.

The water supply portion 81 may include a water tank mounting space 81a provided to mount the water tank 82. The water tank 82 may be removably mounted in the water tank mounting space 81a.

The water supply portion 81 may include an outlet formed to supply water to the water tank 82 mounted in the water tank mounting space 81a. The water tank 82 may include an inlet formed to allow water, which is discharged from the outlet of the water supply portion 81, to be introduced therein. For example, the outlet of the water supply portion 81 may be configured to discharge water supplied from an external water source downward. For example, the inlet of the water tank 82 may be formed at an upper portion of the water tank 82 and may have a shape that is penetrated in the up and down direction. For example, when the water tank 82 is mounted in the water tank mounting space 81a, the outlet of the water supply portion 81 and the inlet of the water tank 82 may be arranged to face each other in the up and down direction.

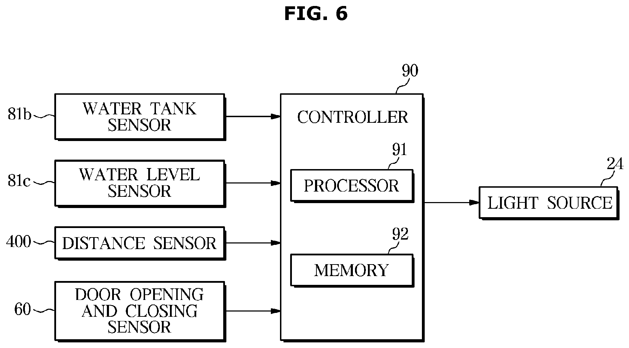

The refrigerator 1 may include a water tank sensor 81b (refer to FIG. 6) configured to detect whether the water tank 82 is mounted in the water tank mounting space 81a. The water tank sensor 81b may be disposed on the back surface of the second inner door 210 or in the water supply portion 81. A controller 90 (refer to FIG. 6) of the refrigerator 1 may identify whether the water tank 82 is mounted in the water tank mounting space 81a based on an output value of the water tank sensor 81b. The controller 90 of the refrigerator 1 may be configured to control the water supply portion 81 to allow water to be supplied to the water tank 82 only when the water tank 82 is mounted in the water tank mounting space 81a. For example, the water tank sensor 81b may be provided as a hall sensor configured to detect a magnet (not shown) disposed in the water tank 82.

The water supply portion 81 may automatically supply water to the water tank 82 to allow a predetermined amount of water to be filled inside the water tank 82 when the water tank 82 is installed in the water tank installation space 81a. The predetermined amount may be approximately a full water level of the water tank 82.

For example, the water supply portion 81 may include a water level sensor 81c (refer to FIG. 6) configured to detect a water level inside the water tank 82 when the water tank 82 is mounted in the water tank mounting space 81a. The water level sensor 81c may output an electrical signal corresponding to the water level inside the water tank 82. The controller 90 of the refrigerator 1 may receive an electrical signal output from the water level sensor 81c and identify an amount of water stored inside the water tank 82 based on the signal. The controller 90 of the refrigerator 1 may be configured to control the water supply portion 81 to prevent water from being supplied to the water tank 82 when the amount of water stored inside the water tank 82 is identified as being greater than or equal to a predetermined amount of water. The controller 90 of the refrigerator 1 may be configured to control the water supply portion 81 to allow water to be supplied to the water tank 82 when the amount of water stored inside the water tank 82 is identified as being less than the predetermined amount of water. For example, the water level sensor 81c may be provided as a capacitance sensor configured to detect capacitance that changes according to the water level inside the water tank 82.

The water supply portion 81 may be mounted on the first inner door 110. For example, the water supply portion 81 may be mounted on the back surface (i.e., the door partition 113) of the first inner door 110. At least a portion of the water supply portion 81 may be positioned in the third storage compartment 23, and the water tank 82 mounted in the water tank mounting space 81a may be positioned inside the third storage compartment 23. The water tank 82 mounted in the water tank mounting space 81a may be cooled by the cold air of the third storage compartment 23, and thus, a user can be provided with cool water from the water tank 82.

However, the configuration of the dispenser 70 and the automatic water supply assembly 80 described above is only an example for describing the water supply device of the refrigerator according to the present disclosure, and the present disclosure is not limited thereto.

To order to allow a user to see the inside of the storage compartment 20 and to check a condition of food stored in the storage compartment 20 without opening the doors 100, 200, and 300, the doors 100, 200, and 300 may include light-transmitting panels 121 and 221.

Particularly, the light-transmitting panels 121 and 221 may be provided to transmit light into and out of the first storage compartment 21 when the first door 100 and the second door 200 close the first storage compartment 21. When light is transmitted into and out of the first storage compartment 21 through the light-transmitting panels 121 and 221, a user can see the inside of the first storage compartment 21.

The meaning of the expression that the light-transmitting panels 121 and 221 is "configured to transmit light" is not limited to a state in which light, which is incident on the light-transmitting panels 121 and 221 from the inside of the first storage compartment 21 or the outside of the first door 100, the second door 200, and the first storage compartment 21 (i.e., the outside of the refrigerator 1) may completely transmit the light-transmitting panels 121 and 221, and includes a state in which even when at least a portion of the light incident on one surface of the light-transmitting panels 121 and 221 is reflected, absorbed, refracted, or scattered by the light-transmitting panels 121 and 221, at least another portion thereof transmits the light-transmitting panels 121 and 221 and is emitted through the other surface of the light-transmitting panels 121 and 221.

The light-transmitting panels 121 and 221 may be composed of various materials that transmits light, such as transparent glass or transparent plastic.

The light-transmitting panels 121 and 221 may be configured to transmit light, but to efficiently block the progress of light when the refrigerator 1 operates in a blocking mode, described later. For example, the light-transmitting panels 121 and 221 may be composed of a pigment having a high light absorption rate, such as a black pigment. Alternatively, surfaces of the light-transmitting panels 121 and 221 may be coated with a material having a high light absorption rate. However, the present disclosure is not limited thereto, and the light-transmitting panels 121 and 221 may have various colors.

The light-transmitting panels 121 and 221 may be formed to have a substantially flat plate shape, but is not limited thereto.

The light-transmitting panels 121 and 221 may form a portion of the exterior of the refrigerator 1. When the first door 100 and the second door 200 are closed, the light-transmitting panels 121 and 221 may form at least a portion of the exterior of the front surface of the refrigerator 1.

Particularly, among the light-transmitting panels 121 and 221, a first light-transmitting panel 121 provided on the first door 100 may be provided on the first outer door 120. The first light-transmitting panel 121 may extend from the front surface to the back surface of the first outer door 120.

Among the light-transmitting panels 121 and 221, a second light-transmitting panel 221 provided on the second door 200 may be provided on the second outer door 220. The second light-transmitting panel 221 may extend from the front surface to the back surface of the second outer door 220.

The first door 100 may include a first door frame 122 provided to support the first light-transmitting panel 121. The first door frame 122 may be formed along an edge of the first light-transmitting panel 121. The first door frame 122 may support the edge of the first light-transmitting panel 121. The first door frame 122 may form an outer edge of the first door 100.

Particularly, the first door frame 122 may be provided on the first outer door 120. The first door frame 122 may be formed along the edge of the first outer door 120.

The second door 200 may include a second door frame 222 provided to support the second light-transmitting panel 221. The second door frame 222 may be formed along an edge of the second light-transmitting panel 221. The second door frame 222 may support the edge of the second light-transmitting panel 221. The second door frame 222 may form an outer edge of the second door 200.

Particularly, the second door frame 222 may be provided on the second outer door 220. The second door frame 222 may be formed along the edge of the second outer door 220.

The refrigerator 1 may include a distance sensor 400. The distance sensor 400 may be configured to detect a distance to an object (e.g., a user standing adjacent to the refrigerator 1 or a user approaching the refrigerator 1) located outside the doors 100, 200, and 300 and the storage compartment 20. The "outside of the doors 100, 200, and 300 and the storage compartment 20" means the outside of the refrigerator 1, and more particularly, the front outside of the refrigerator 1. In other words, the "outside of the doors 100, 200, and 300 and the storage compartment 20" means the front of the doors 100, 200, and 300 when the doors 100, 200, and 300 closes the storage compartment 20.

The distance sensor 400 may be electrically connected to the controller 90 (refer to FIG. 6) of the refrigerator 1. For example, the distance sensor 400 may be electrically connected to the controller 90 through a wire W (refer to FIG. 3).

For example, the distance sensor 400 may be mounted on the first door 100, the controller 90 may be mounted on the main body 10, and the wire W may be connected to the first door 100 and the main body 10, respectively.

For example, the distance sensor 400 may be mounted on the second door 200, the controller 90 may be mounted on the main body 10, and the wire W may be connected to the second door 200 and the main body 10, respectively.

A detailed description of the structure, operation, and function of the distance sensor 400 is described below.

The configuration of the refrigerator 1 described above with reference to FIGS. 1 and 2 is merely an example for describing the refrigerator according to the present disclosure, and the present disclosure is not limited thereto. The refrigerator according to the present disclosure may be provided to include various configurations for performing the function of supplying cold air to the storage compartment for storing food.

For example, although one embodiment, in which the third storage compartment 23 partitioned from the first storage compartment 21 by the door partition 113 provided on the first inner door 110 is provided separately on the left side of the refrigerator 1, is described, but the present disclosure is not limited thereto. Alternatively, the door partition may be provided on the second inner door 210, or a separate storage compartment partitioned from the first storage compartment 21 by the door partition of the second inner door 210 may be provided on the right side of the refrigerator 1. Alternatively, a separate storage compartment partitioned from the first storage compartment 21 may not be provided on the upper portion of the refrigerator 1.

Alternatively, the first door 100 and the second door 200 may not be configured as a double door type including an inner door and an outer door, which is different from the description.

The type of refrigerator, to which the refrigerator according to the present disclosure is applied, is not limited to the type of refrigerator 1 illustrated in the drawings, and the refrigerator according to the present disclosure may include various types of refrigerators such as a side-by-side type, a French door type, a Bottom Mounted Freezer (BMF) type, a Top Mounted Freezer (TMF) type, or a single door type.

In addition, although one embodiment, in which the refrigerator 1 according to the present disclosure is an indirect-cooling refrigerator, is described as an example of the present disclosure, the present disclosure is not limited thereto and may also be applied to a direct-cooling refrigerator.

However, for convenience of description, the refrigerator according to the present disclosure will be described in detail based on the refrigerator 1 according to one embodiment illustrated in FIGS. 1 to 23.

FIG. 3 is a view illustrating a coupling structure of a door and a main body of the refrigerator according to one embodiment of the present disclosure. FIG. 4 is a view illustrating a portion of a configuration of the door of the refrigerator according to one embodiment of the present disclosure.

Referring to FIGS. 3 and 4, the inner doors 110 and 210 of the refrigerator 1 according to one embodiment of the present disclosure may be configured to be rotatable relative to the main body 10. In addition, the outer doors 120 and 220 of the refrigerator 1 according to one embodiment of the present disclosure may be configured to be rotatable relative to the inner doors 110 and 210.

When describing a coupling structure of the first door 100, the second door 200, and the main body 10 of the refrigerator 1 according to one embodiment of the present disclosure with reference to FIGS. 3 and 4, a coupling structure of the first door 100 and the main body 10 is described as an example for convenience, but contents described below may also be applied to a coupling structure of the second door 200 and the main body 10.

The refrigerator 1 may include the first hinge 30 configured to allow the first inner door 110 to be rotatable relative to the main body 10. The first hinge 30 may be respectively coupled to the main body 10 and the first inner door 110. The first inner door 110 may be rotatably coupled to the main body 10 by the first hinge 30.

The first hinge 30 may include a hinge bracket 31 and a first hinge shaft 32 formed on the hinge bracket 31. The hinge bracket 31 may be coupled to the main body 10.

The first inner door 110 may be configured to be rotatable with respect to the first hinge shaft 32 of the first hinge 30.

An inner door hinge portion 40, into which the first hinge shaft 32 is rotatably inserted, may be provided on the upper portion of the first inner door 110. The inner door hinge portion 40 may include a hinge hole 41 into which the first hinge shaft 32 is rotatably inserted. The first inner door 110 may be rotated with respect to the first hinge shaft 32 by the first hinge shaft 32 inserted into the hinge hole 41. The inner door hinge portion 40 may be provided on the upper portion of the first inner door 110.

The refrigerator 1 may include the second hinge 50 provided to allow the first outer door 120 to be rotatable relative to the first inner door 110. The second hinge 50 may be respectively coupled to the first inner door 110 and the first outer door 120. The first outer door 120 may be rotatably coupled to the first inner door 110 by the second hinge 50. The second hinge 50 may be coupled to the upper portion of the first inner door 110.

The second hinge 50 may include a second hinge shaft 53. The first outer door 120 may be rotated with respect to the second hinge shaft 53. A rotation hole 123, into which the second hinge shaft 53 is rotatably inserted, may be formed in the first outer door 120. The first outer door 120 may be rotated with respect to the second hinge shaft 53 by the second hinge shaft 53 inserted into the rotation hole 123. A hinge receiving portion 124, in which a portion of the second hinge 50 is received, may be formed in the first outer door 120. The rotation hole 123 may be formed inside the hinge receiving portion 124.

Particularly, the hinge receiving portion 124 and the rotation hole 123 may be provided in the first door frame 122 of the first outer door 120 described later. Particularly, the hinge receiving portion 124 and the rotation hole 123 may be provided in an upper door cap 122-4 of the first outer door 120 described later.

The controller 90 (refer to FIG. 6) and/or a power supply device (not shown) provided in the main body 10 may be electrically connected to the distance sensor 400 mounted on the first outer door 120 through the wire W.

The wire W may include a main body wire W1 including one end thereof connected to the controller 90 and/or the power supply device provided in the main body 10. The other end of the main body wire W1 may be connected to a first wire W2 by being guided through a first hollow portion 33 of the first hinge shaft 32. The main body wire W1 and the first wire W2 may be connected to each other as a first connector C1 of the main body wire W1 is connected to a second connector C2 of the first wire W2. The main body wire W1 and the first wire W2 may be removably connected by the first connector C1 of the main body wire W1 and the second connector C2 of the first wire W2.

The wire W may include the first wire W2 including one end thereof connected to the main body wire W1 and the other end thereof connected to a second wire W3. The first wire W2 and the second wire W3 may be connected to each other as a third connector C3 of the first wire W2 is connected to a fourth connector C4 of the second wire W3. The first wire W2 may be removably connected to the main body wire W1 and may be arranged to pass through the first inner door 110. The first wire W2 connected to the main body wire W1 may be inserted into the first hollow portion 33 of the first hinge shaft 32 and guided by the inner door hinge portion 40 assembled to the first inner door 110.

The wire W may include the second wire W3 including one end thereof connected to the first wire W2 and the other end thereof connected to the distance sensor 400. The second wire W3 and the first wire W2 may be connected as the fourth connector C4 of the second wire W3 is connected to the third connector C3 of the first wire W2. The second wire W3 may be removably connected to the first wire W2 and may extend from the first outer door 120 to the first inner door 110. One end of the second wire W3 extending from the first outer door 120 to the first inner door 110 may extend to the first inner door 110 through the rotation hole 123 formed in the first outer door 120. One end of the second wire W3 extending to the first inner door 110 may be connected to the first wire W2 by being guided by the second hinge 50.

The inner door hinge portion 40 may include the hinge hole 41 into which the first hinge shaft 32 of the first hinge 30 is rotatably inserted. The hinge hole 41 may be formed to allow an upper portion thereof to be open. The hinge hole 41 may guide the first wire W2 connected to the main body wire W1. The first wire W2 may be guided to the foam space of the door insulating material formed in the first inner door 110 by the hinge hole 41.

The inner door hinge portion 40 may include a connection space 42 formed to allow the first wire W2 to be connected to the second wire W3. The third connector C3 of the first wire W2 and the fourth connector C4 of the second wire W3 may be removably connected to the connection space 42. The connection space 42 may be formed to allow an upper portion thereof to be open.

The first wire W2 may extend from an inside of the hinge hole 41 to an inside of the connection space 42.

The inner door hinge portion 40 may include a connection space cover 43 covering the upper portion of the connection space 42 that is open. The connection space cover 43 may prevent at least a portion of each of the first wire W2 and the second wire W3, which are connected in the connection space 42, from being exposed to the outside.

The second hinge 50 may guide the second wire W3, which is connected to the distance sensor 400 mounted on the first outer door 120, to the connection space 42.

The second hinge 50 may include a guide hinge 51 coupled to the outer door 120 to be connected to the connection space 42. The guide hinge 51 may be formed to allow an upper portion thereof to be open. The guide hinge 51 may guide the second wire W3 to the connection space 42. As one end of the guide hinge 51 coupled to the first inner door 110 and the other end of the guide hinge 51 coupled to the first outer door 120 are penetrated, the second wire W3 may be guided from the first outer door 120 to the connection space 42 of the first inner door 110.

The second hinge 50 may include a guide hinge cover 52 coupled to an upper portion of the guide hinge 51. The guide hinge cover 52 may cover the upper portion of the guide hinge 51. The guide hinge cover 52 may be coupled to the upper portion of the first inner door 110.

The second hinge 50 may include the second hinge shaft 53 rotatably inserted into the rotation hole 123 formed in the first outer door 120. The second hinge shaft 53 may include a second hollow portion 54. The second wire W3 extending to the first inner door 110 through the rotation hole 123 formed in the first outer door 120 may be inserted into the second hollow portion 54 of the second hinge shaft 53. The second hollow portion 54 may communicate with a space formed between the guide hinge 51 and the guide hinge cover 52. For example, the second hinge shaft 53 may be provided in the guide hinge cover 52.

The second wire W3 inserted into the second hollow portion 54 may be inserted into the guide hinge 51. The second wire W3 inserted into the guide hinge 51 may be guided by the guide hinge 51 and guided into the connection space 42.

Although not shown in FIGS. 3 and 4, the wire W may further include a third wire (not shown) that electrically connects the controller 90 and the water supply devices 70 and 80 mounted on the first inner door 110. The third wire may penetrate the first inner door 110 and be connected to the water supply devices 70 and 80. The third wire may penetrate the hinge hole 41 of the inner door hinge portion 40.

With the above-mentioned configuration, the inner doors 110 and 210 of the refrigerator 1 according to one embodiment may be configured to be rotatable with respect to the main body 10, and the outer doors 120 and 220 may be configured to be rotatable with respect to the inner doors 110 and 210. In addition, with the above-mentioned configuration, the controller 90 or the power supply device provided in the main body 10 may be electrically connected to the distance sensor 400 provided in the first door 100 or the second door 200.

The configuration of the wire W described above is only an example of the wires connected to the main body and the door respectively in the refrigerator according to the present disclosure, and the present disclosure is not limited thereto.

In addition, the configuration of the first hinge 30, the second hinge 50, the inner door hinge portion 40, etc. described above is merely an example of a hinge configuration configured to guide the wire connected to the main body and the door when the inner door and the outer door are respectively configured to be rotatable in the refrigerator according to the present disclosure, and the present disclosure is not limited thereto.

FIG. 5 is a cross-sectional side view illustrating a portion of a configuration of the refrigerator according to one embodiment of the present disclosure.

Referring to FIG. 5, the refrigerator 1 according to one embodiment of the present disclosure may include the light source 24 provided in the storage compartment 20. The light source 24 may be configured to emit light.

Particularly, the light source 24 may be provided in the first storage compartment 21. For example, the light source 24 may include an upper light source 24a provided in the upper portion of the first storage compartment 21, and a side light source 24b provided on at least one of the left and right sides of the first storage compartment 21. The light source 24 may be mounted on the inner case 11. However, the position of the light source 24 is not limited thereto, and the light source 24 may be provided in various positions within the first storage compartment 21.

The light source 24 may be configured to emit light to the first storage compartment 21 under a predetermined condition. Accordingly, a user can easily check the status of food, etc. stored in the first storage compartment 21.

The light source 24 may be configured to emit light to the light-transmitting panels 121 and 221 under a predetermined condition. Particularly, the light source 24 may be configured to emit light to the first light-transmitting panel 121 under a predetermined condition when the first door 100 is closed. In addition, the light source 24 may be configured to emit light to the second light-transmitting panel 221 under a predetermined condition when the second door 200 is closed. Accordingly, a user can easily check the status of food, etc. stored in the first storage compartment 21 even when the first door 100 and the second door 200 are closed. In addition, a user can easily check the status of food, etc. stored in the third storage compartment 23 or the status of the water tank 82 even when the first outer door 120 of the first door 100 is closed.

The light source 24 may be electrically connected to the controller 90 (refer to FIG. 6). The light source 24 may be turned on/off by the controller 90.

The upper light source 24a and the side light source 24b may be turned on/off simultaneously by the controller 90, but are not limited thereto. Alternatively, the upper light source 24a and the side light source 24b may be turned on/off independently of each other by the controller 90.

A condition under which the light source 24 is turned on/off by the controller 90 will be described later.

For example, the light source 24 may include a light-emitting diode (LED).

FIG. 6 is a block diagram illustrating a portion of the configuration of the refrigerator according to one embodiment of the present disclosure.

Referring to FIG. 6, the refrigerator 1 according to one embodiment of the present disclosure may include the controller 90 configured to control various components of the refrigerator 1.

The controller 90 may include a processor 91 configured to generate a control signal regarding the operation of the refrigerator 1, and a memory 92 configured to store programs, applications, instructions and/or data for the operation of the refrigerator 1. The processor 91 and the memory 92 may be implemented as separate semiconductor devices or as a single semiconductor device.

In addition, the controller 90 may include a plurality of processors or a plurality of memories. The controller 90 may be provided at various locations inside the refrigerator 1. For example, the controller 90 may be included in a printed circuit board provided in an electronic portion (not shown) of the refrigerator 1.

The processor 91 may include an arithmetic circuit, a memory circuit, and a control circuit. The processor 91 may include a single chip or a plurality of chips. In addition, the processor 91 may include a single core or a plurality of cores.

The memory 92 may store various programs and data required for the control, and may temporarily store temporary data generated during the control.

The memory 92 may include a volatile memory such as Static Random Access Memory (S-RAM) and Dynamic Random Access Memory (D-RAM), and a nonvolatile memory such as Read Only Memory (ROM) and Erasable Programmable Read Only Memory (EPROM). The memory 92 may include a single memory element or a plurality of memory elements.

The processor 91 may be electrically connected to the memory 92. The processor 91 may process data and/or signals using a program provided from the memory 92, and may transmit a control signal to each component of the refrigerator 1 based on the processing result. Each component of the refrigerator 1 may be operated based on the control signal of the processor 91.

The processor 91 may be electrically connected to the water tank sensor 81b. The water tank sensor 81b may detect whether the water tank 82 is mounted in the water tank mounting space 81a, and output an electrical signal corresponding thereto. The processor 91 may receive the electrical signal output from the water tank sensor 81b and determine whether the water tank 82 is mounted in the water tank mounting space 81a based on the electrical signal. The processor 91 may control the water supply portion 81 to allow water to be supplied to the water tank 82 only when the water tank 82 is mounted in the water tank mounting space 81a.

The processor 91 may be electrically connected to the water level sensor 81c. The water level sensor 81c may output an electrical signal corresponding to a water level inside the water tank 82. The processor 91 may receive the electrical signal output from the water level sensor 81c and, based on the electrical signal, determine an amount of water stored inside the water tank 82. The processor 91 may be configured to control the water supply portion 81 to prevent water from supplying to the water tank 82 when the amount of water stored inside the water tank 82 is greater than or equal to a predetermined amount of water. The processor 91 may be configured to control the water supply portion 81 to start the water supply to the water tank 82 when the amount of water stored inside the water tank 82 is less than the predetermined amount of water.

The processor 91 may be electrically connected to the light source 24. The processor 91 may control the light source 24 to emit light based on a predetermined condition. Alternatively, the processor 91 may control the light source 24 not to emit light based on the predetermined condition. That is, the processor 91 may selectively turn on/ off the light source 24 depending on whether the predetermined condition is satisfied.

The refrigerator 1 may include a door opening and closing sensor 60 configured to detect whether the doors 100, 200 or 300 is opened or closed. For example, the door opening and closing sensor 60 may be configured to detect whether the first door 100 or the second door 200 opens or closes the first storage compartment 21. The door opening and closing sensor 60 may output an electrical signal (hereinafter referred to as a 'door opening and closing signal') corresponding to the opening or closing of the first door 100 or the second door 200. For example, the door opening and closing sensor 60 may include a micro switch or a reed switch.

The processor 91 may be electrically connected to the door opening and closing sensor 60. The processor 91 may receive a door opening and closing signal output from the door opening and closing sensor 60 and determine whether the first door 100 or the second door 200 is open or closed based on the signal. The processor 91 may control the light source 24 to emit light based on the first door 100 or the second door 200 being open. The processor 91 may control the light source 24 not to emit light based on the first door 100 and the second door 200 being closed. Particularly, the processor 91 may control the light source 24 not to emit light immediately when the first door 100 and the second door 200 are closed, or after a predetermined period of time elapses after the first door 100 and the second door 200 are closed.

The processor 91 may be electrically connected to the distance sensor 400. The distance sensor 400 may detect an object located outside the doors 100, 200 and 300, and the storage compartment 20 (i.e., located in front of the refrigerator 1). The distance sensor 400 may output an electrical signal corresponding to a distance to the object located in front of the refrigerator 1. The processor 91 may receive the electrical signal output from the distance sensor 400 and control the on/off of the light source 24 based on the electrical signal.

For example, the processor 91 may control the light source 24 to emit light based on the distance between the distance sensor 400 and the object (i.e., an output value of the distance sensor 400) being less than or equal to a reference distance. In this case, the light source 24 may emit light toward the light-transmitting panels 121 and 221. This may be referred to as the 'light-transmitting mode' of the refrigerator 1.

Conversely, the processor 91 may control the light source 24 not to emit light based on the output value of the distance sensor 400 exceeding the reference distance, or based on a period of time, which elapses while the light source 24 emits light and the first door 100 or the second door 200 is not opened according to the light-transmitting mode, exceeding a reference time. This may be referred to as the 'blocking mode' of the refrigerator 1.

When the refrigerator 1 operates in the light-transmitting mode, a user can check the inside of the first storage compartment 21 or the third storage compartment 23 without opening the first storage compartment 21 or the third storage compartment 23, thereby providing convenience to the user. **In** addition, a user can check the inside of the first storage compartment 21 or the third storage compartment 23 without opening the first storage compartment 21 or the third storage compartment 23 and thus it is possible to prevent cold air from leaking from the first storage compartment 21 or the third storage compartment 23. Therefore, it is possible to improve the cooling efficiency of the refrigerator 1 and to reduce the power consumption.

However, when the refrigerator 1 operates in the light-transmitting mode, a user can see the inside of the first storage compartment 21 or the third storage compartment 23 through the light-transmitting panels 121 and 221. However, when the refrigerator 1 operates in the light-transmitting mode even when a user does not need to see the inside of the first storage compartment 21 or the third storage compartment 23, unnecessary power consumption may occur. Therefore, the refrigerator 1 may be required to be set to selectively operate in the light-transmitting mode under a predetermined condition.

For example, based on an input device (not shown), which is provided in the refrigerator 1, obtaining a user input for operation in the light-transmitting mode, the refrigerator 1 may operate in the light-transmitting mode. Alternatively, a vibration sensor (not shown) configured to detect pressure, acceleration, vibration, etc. applied to the first door 100 or the second door 200 may be provided in the first door 100 or the second door 200 of the refrigerator 1, and the refrigerator 1 may operate in the light-transmitting mode based on pressure, etc. applied to the first door 100 or the second door 200.

However, according to the above examples, a user is required to perform an action of touching the first door 100 or the second door 200 or operating another input device in order to operate the refrigerator 1 in the light-transmitting mode. In addition, a user may be required to approach the refrigerator 1 at a very close distance in order to touch the first door 100 or the second door 200 or operate another input device.

In addition, as for an example in which the refrigerator 1 operates in the light-transmitting mode based on the pressure applied to the first door 100 and the second door 200, etc., a user must directly touch the first door 100 or the second door 200, and thus the quality of the product's appearance may deteriorate due to causes such as fingerprints or foreign substances being left on the first door 100 or the second door 200.

In addition, in a state in which a vibration sensor is provided on one of the first door 100 and the second door 200, the refrigerator 1 may not operate in the light-transmitting mode when a user touches a door other than the corresponding door. Therefore, it is appropriate that a vibration sensor is provided on each of the first door 100 and the second door 200 respectively, which may increase the number of components and increase the manufacturing cost of the product.

To ease the difficulty, the refrigerator 1 may operate in the light-transmitting mode based on a user being located within a predetermined distance. Hereinafter the structure and function that allows the refrigerator 1 to detect whether a user is approaching using the distance sensor 400 will be particularly described.

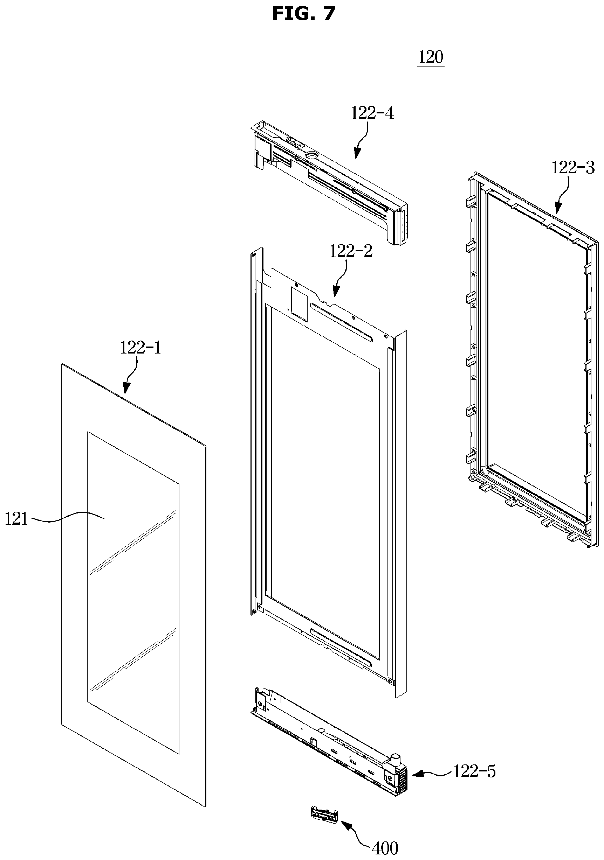

FIG. 7 is an exploded view illustrating the door of the refrigerator according to one embodiment of the present disclosure. FIG. 8 is a cross-sectional view illustrating the door of the refrigerator according to one embodiment of the present disclosure.

FIGS. 7 and 8 illustrate only the structure of the first outer door 120 and the first door frame 122 provided in the refrigerator 1 according to one embodiment of the present disclosure, but a structure corresponding to the structure of the first outer door 120 and the first door frame 122 described below may also be applied to the second outer door 220 and the second door frame 222, and a detailed description of the structure of the second door frame 222 will be omitted.

Referring to FIGS. 7 and 8, the first door frame 122 of the refrigerator 1 according to one embodiment of the present disclosure may include frame bodies 122-1, 122-2 and 122-3, the upper door cap 122-4, and a lower door cap 122-5.

The frame bodies 122-1, 122-2, and 122-3 may be coupled to the edge of the first light-transmitting panel 121. The frame bodies 122-1, 122-2, and 122-3 may support the edge of the first light-transmitting panel 121. The frame bodies 122-1, 122-2, and 122-3 may be formed along the edge of the first light-transmitting panel 121.

The frame bodies 122-1, 122-2, and 122-3 may form an opening in which at least a portion of the first light-transmitting panel 121 is arranged. At least a portion of the first light-transmitting panel 121 may be arranged in the opening of the frame bodies 122-1, 122-2, and 122-3 to form a light-transmitting region that is formed to transmit light into and out of the first storage compartment 21 or the third storage compartment 23. Another portion of the first light-transmitting panel 121 may extend outward from the edge more than the light-transmitting region and be coupled to the frame bodies 122-1, 122-2, and 122-3. The first light-transmitting panel 121 may cover the opening of the frame bodies 122-1, 122-2, and 122-3.

The frame bodies 122-1, 122-2, and 122-3 may form at least a portion of the exterior of the first outer door 120.

The frame bodies 122-1, 122-2, and 122-3 may include a front frame 122-1, a main frame 122-2, and a rear frame 122-3.

The front frame 122-1 may form at least a portion of an exterior of a front surface of the first outer door 120. The "front surface" of the first outer door 120 means a front surface, which is with respect to the X-direction, of the first outer door 120 when the first outer door 120 is in a position to close the third storage compartment 23. The front frame 122-1 may form a portion of the exterior the front surface of the first outer door 120.

The front frame 122-1 may form at least a portion of the exterior of the front surface of the refrigerator 1 when the first outer door 120 is in a position to close the third storage compartment 23.

The front frame 122-1 may cover the main frame 122-2 and the rear frame 122-3 from the front side.

The front frame 122-1 may have an opening shape, and at least a portion of the first light-transmitting panel 121 may be positioned inside the opening of the front frame 122-1.

The first light-transmitting panel 121 may be coupled to the front frame 122-1. The front frame 122-1 may be formed to surround the edge of the first light-transmitting panel 121. The front frame 122-1 may be coupled to the edge of the first light-transmitting panel 121 and may support the edge of the first light-transmitting panel 121.

The first light-transmitting panel 121 may be provided in plurality. A plurality of first light-transmitting panels 121 may be spaced apart from each other in the front and rear direction. FIG. 8 illustrates that three first light-transmitting panels 121 are provided, but the number of first light-transmitting panels 121 is not limited thereto.

An air gap AG may be formed between a pair of first light-transmitting panels 121 spaced apart from each other among the plurality of first light-transmitting panels 121. The air gap AG may be formed inside the first outer door 120. The air gap AG may prevent heat from being transferred into and out of the third storage compartment 23 through the first light-transmitting panels 121 and may improve the insulation effect of the first outer door 120.

The front frame 122-1 may support the plurality of first light-transmitting panels 121 so as to be spaced apart from each other in the front and rear direction.

The main frame 122-2 may support the front frame 122-1 and the rear frame 122-3. The front frame 122-1 and the rear frame 122-3 may each be coupled to the main frame 122-2.

The main frame 122-2 may form at least a portion of an exterior of left and right side-edges of the first outer door 120.

The "left and right side-edges" of the first outer door 120 means the left and right side-edges, which are with respect to the Y direction, of the first outer door 120 when the first outer door 120 is in a position to close the third storage compartment 23.

The main frame 122-2 may form at least a portion of an exterior of the rear surface of the first outer door 120. The "rear surface" of the first outer door 120 means a rear surface, which is with respect to the X direction, of the first outer door 120 when the first outer door 120 is in the position to close the third storage compartment 23.

The main frame 122-2 may have an opening shape, and at least a portion of the first light-transmitting panel 121 may be positioned inside the opening of the main frame 122-2.

The rear frame 122-3 may be coupled to a back surface of the front frame 122-1 or the main frame 122-2. In other words, the rear frame 122-3 may be coupled to the rear side of the front frame 122-1 or the main frame 122-2. The "rear side" of the first outer door 120 means a rear side, which is with respect to the X direction, of the first outer door 120 when the first outer door 120 is in the position to close the third storage compartment 23.

The rear frame 122-3 may have an opening shape, and at least a portion of the first light-transmitting panel 121 may be positioned inside the opening of the rear frame 122-3.

However, the present disclosure is not limited thereto, and the configuration of the frame bodies 122-1, 122-2, and 122-3 may be provided in various ways.

The first door frame 122 may include the upper door cap 122-4 coupled to upper ends of the frame bodies 122-1, 122-2, and 122-3, and the lower door cap 122-5 coupled to lower ends of the frame bodies 122-1, 122-2, and 122-3.

The upper door cap 122-4 may form at least a portion of an exterior of an upper surface of the first outer door 120.

The upper door cap 122-4 may be supported by the main frame 122-2. The upper door cap 122-4 may be coupled to an upper portion of the main frame 122-2.

The upper door cap 122-4 may be covered by the front frame 122-1. The upper door cap 122-4 may be coupled to an upper portion of the front frame 122-1. An upper end of the upper door cap 122-4 and an upper end of the front frame 122-1 may be aligned in a substantially horizontal direction (a direction parallel to the X-Y plane).

The lower door cap 122-5 may form at least a portion of an exterior of a lower surface of the first outer door 120.

The lower door cap 122-5 may be supported by the main frame 122-2. The lower door cap 122-5 may be coupled to a lower portion of the main frame 122-2.

The lower door cap 122-5 may be covered by the front frame 122-1. The lower door cap 122-5 may be coupled to a lower portion of the front frame 122-1. A lower end of the lower door cap 122-5 and a lower end of the front frame 122-1 may be aligned in the substantially horizontal direction (the direction parallel to the X-Y plane).

The door insulating material 125 may be provided in the inner space of the first outer door 120 to prevent heat from being transferred into and out of the third storage compartment 23 through the first outer door 120.

The door insulating material 125 may be disposed in a space formed among the front frame 122-1, the main frame 122-2, and the rear frame 122-3 while being formed between the upper door cap 122-4 and the lower door cap 122-5. Particularly, the door insulating material 125 may be formed by injecting a foam liquid into the space formed among the front frame 122-1, the main frame 122-2, and the rear frame 122-3 while being formed between the upper door cap 122-4 and the lower door cap 122-5.

The door insulating material 125 may connect each component of the first door frame 122, such as the front frame 122-1, the main frame 122-2, and the rear frame 122-3.

The second wire W3 described above may be disposed in the foam space of the door insulating material 125. The second wire W3 may be embedded by the door insulating material 125.

A foaming agent inlet (not shown) for injecting a foaming agent of the door insulating material 125 into the inside of the first outer door 120 may be provided in the upper door cap 122-4 or the lower door cap 122-5.

The frame bodies 122-1, 122-2, and 122-3, the upper door cap 122-4, and the lower door cap 122-5 may each form at least a portion of the edge of the first outer door 120.

For example, the frame bodies 122-1, 122-2, and 122-3 may form an upper edge, a lower edge, and left and right edges of the first outer door 120, respectively. The upper door cap 122-4 may form the upper edge of the first outer door 120. The lower door cap 122-5 may form the lower edge of the first outer door 120.

The distance sensor 400 may be mounted on the lower door cap 122-5. A specific description of the structure for mounting the distance sensor 400 on the lower door cap 122-5 will be described later.

The structure of the first door frame 122 described above is only an example of the door frame provided in the refrigerator according to one embodiment of the present disclosure, and the present disclosure is not limited thereto.

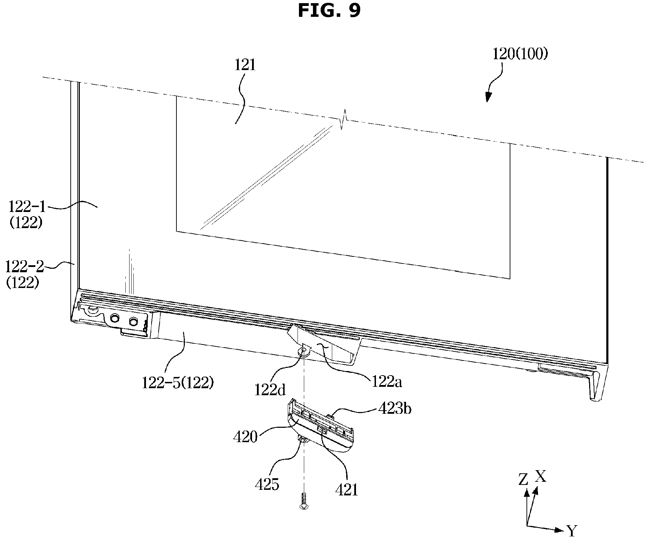

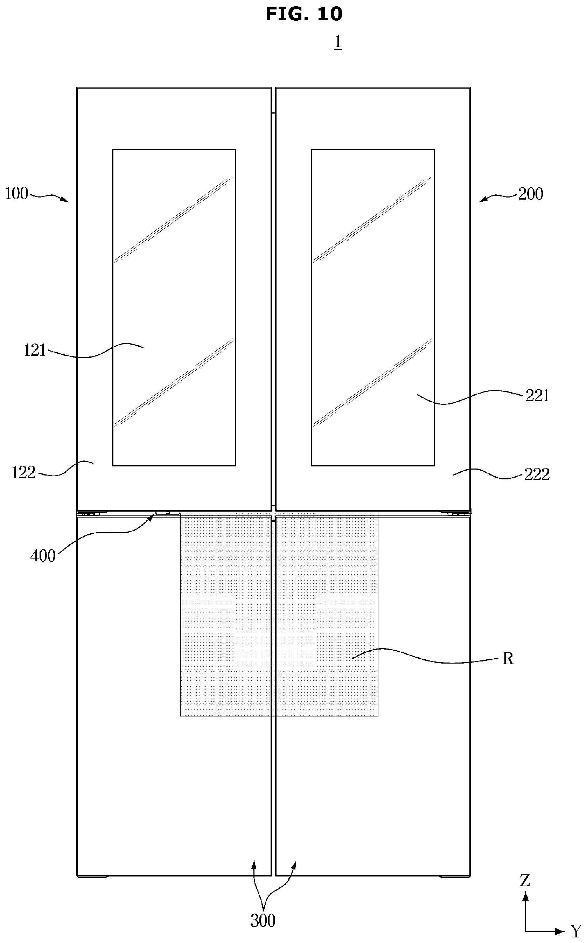

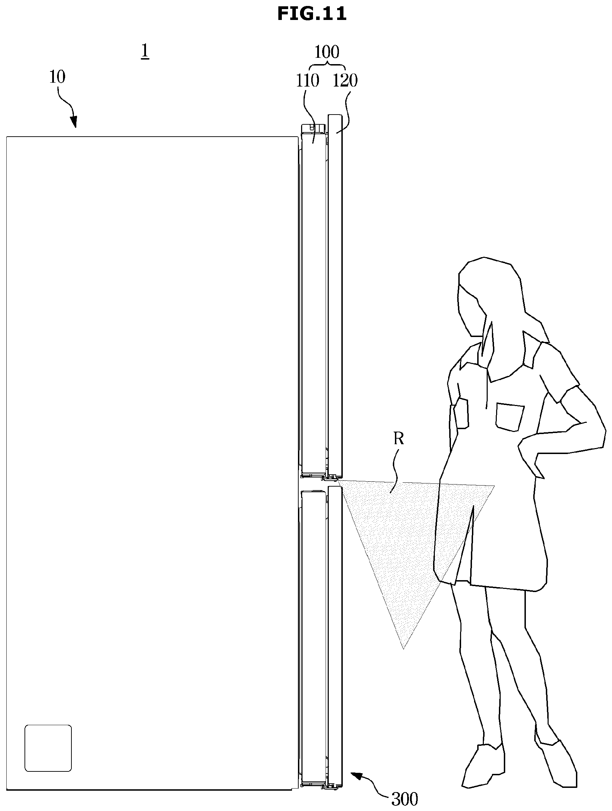

FIG. 9 is a view illustrating a state in which a distance sensor of the refrigerator according to one embodiment of the present disclosure is disassembled from the door. FIG. 10 is a front view schematically illustrating a region detected by the distance sensor of the refrigerator according to one embodiment of the present disclosure. FIG. 11 is a side view schematically illustrating the region detected by the distance sensor of the refrigerator according to one embodiment of the present disclosure.

Referring to FIGS. 9 to 11, the refrigerator 1 according to one embodiment of the present disclosure may include the distance sensor 400. The distance sensor 400 may be configured to detect a distance to an object located outside the doors 100, 200, and 300, and the storage compartment 20 (in other words, a distance to an object located in front of the doors 100, 200, and 300 when the storage compartment 20 is closed). The distance sensor 400 may be configured to detect a distance to an object located in front of at least one door 100, 200, and 300 when the storage compartment 20 is closed. The distance sensor 400 may be configured to detect a distance to an object located on the front outer side of the refrigerator 1. The distance sensor 400 may be configured to detect an object located in a location close to the refrigerator 1. The distance sensor 400 may be configured to detect an object approaching the refrigerator 1. The distance sensor 400 may be configured to output an electrical signal corresponding to the distance from the distance sensor 400 to the detected object.

For example, the distance sensor 400 may be configured to emit detection light to a front region of the refrigerator 1 and detect detection light reflected by an object located in front of the refrigerator 1. Based on the time difference between a point of time when the detection light is emitted by the distance sensor 400 and a point of time when the detection light reflected by the object is detected, the distance sensor 400 may detect a distance from the distance sensor 400 to the object. In other words, the processor 91 may detect the distance from the distance sensor 400 to the object based on the time difference between the point of time when the detection light is emitted by the distance sensor 400 and the point of when the detection light reflected by the object is detected.

That is, the distance sensor 400 may include a Time of flight (TOF) sensor.

For example, the detection light may have a wavelength in the infrared range.

The distance sensor 400 may be mounted on at least one of the first door 100 or the second door 200 to detect an object located in front of the first door 110 or the second door 200 when the first storage compartment 21 is closed.

For convenience of description, the following description will be described on an assumption that the distance sensor 400 is mounted on the first door 100, but the following description may be equally applied even when the distance sensor 400 is mounted on the second door 200.

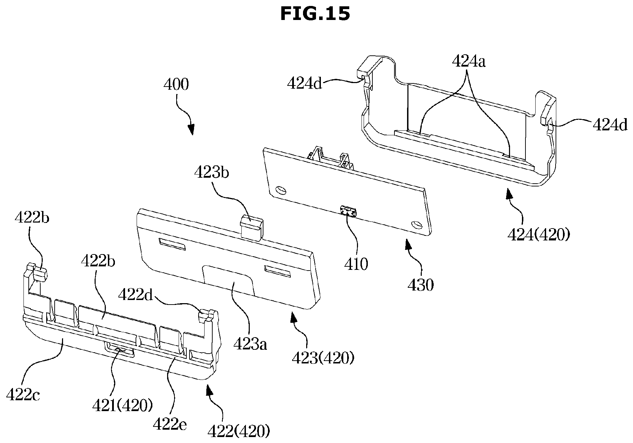

The distance sensor 400 may be mounted on the first door frame 122 of the first door 100. The distance sensor 400 may be mounted on the edge of the first door 100. Particularly, the distance sensor 400 may be mounted on the edge of the first door frame 122, and the distance sensor 400 may be disposed to allow a portion (a sensor element 410 (refer to FIG. 15, etc., described below)) that emits and receives detection light and the sensing hole 421 to be exposed to the outside of the first door frame 122, so as to detect an object.

As the distance sensor 400 is mounted on the first door frame 122, the distance sensor 400 may be more stably supported than when the distance sensor 400 is mounted on the first light-transmitting panel 121. In addition, when it is assumed that the distance sensor 400 is mounted on the first light-transmitting panel 121 and when the refrigerator 1 operates in the light-transmitting mode, the distance sensor 400 may be seen through the first light-transmitting panel 121, which may result in a deterioration in the appearance quality. However, when the distance sensor 400 is mounted on the first door frame 122, the deterioration may be prevented.

In addition, as the distance sensor 400 is mounted on the first door frame 122, particularly on an edge thereof, the distance sensor 400 may be easily disassembled from or assembled to the first door 100.

Particularly, the distance sensor 400 may be mounted on the lower edge of the first door frame 122. For example, the distance sensor 400 may be mounted on the lower door cap 122-5.

When the distance sensor 400 is mounted on the upper edge of the first door frame 122, a height of the distance sensor 400 in the Z direction from the ground may be excessively high compared to a height of a typical user. When the distance sensor 400 is mounted on the left edge of the first door frame 122, the distance sensor 400 may be positioned excessively to the left in the Y direction from a position where a user is generally positioned when approaching the refrigerator 1. When the distance sensor 400 is mounted on the right edge of the first door frame 122, the right edge of the first door frame 122 may be a portion that faces and is adjacent to the left edge of the second door frame 222 of the second door 200. Accordingly, the distance sensor 400 may interfere with the second door 200.

In contrast, when the distance sensor 400 is mounted on the lower edge of the first door frame 122, the height of the distance sensor 400 in the Z direction from the ground may not be excessively higher than the height of a typical user. In addition, the distance sensor 400 may be positioned closer to a center of a width, which is in the Y-direction, of the refrigerator 1 than when the distance sensor 400 is mounted on the left edge of the first door frame 122. In addition, the distance sensor 400 may be prevented from interfering with the second door 200. When the distance sensor 400 is mounted on the lower edge of the first door frame 122, the distance sensor 400 may face the upper edge of the third door 300. However, depending on the design, the first door 100 and the third door 300 may be arranged with a longer separation distance than a distance between the first door 100 and the second door 200 to secure a space between the first door 100 and the third door 300 for a user to grasp the first door 100 or the third door 300. In addition, according to the design, the first door 100 and the second door 200 may open and close a single first storage compartment 21 while the first door 100 and the third door 300 open and close the different storage compartments 21 and 22 partitioned by the horizontal partition 15. Accordingly, the first door 100 and the third door 300 may be arranged with a longer separation distance than the distance between the first door 100 and the second door 200. Accordingly, when the distance sensor 400 is mounted on the lower edge of the first door frame 122, it is possible to more efficiently prevent the distance sensor 400 from interfering with a door adjacent to the first door 100.

For example, the distance sensor 400 may be disposed adjacent to a central portion, which is in the Y direction, in the lower edge of the first door frame 122. In other words, the distance sensor 400 may be disposed adjacent to a central portion, which is in the Y direction, of the lower door cap 122-5.

However, the present disclosure is not limited thereto, and the distance sensor 400 may be mounted on various locations on the first door frame 122.

The first door frame 122 may include a sensor mounting groove 122a in which the distance sensor 400 is mounted. At least a portion of the distance sensor 400 may be inserted into the sensor mounting groove 122a. Accordingly, the distance sensor 400 may be stably fixed to the first door frame 122.

For example, the sensor mounting groove 122a may be formed in the lower door cap 122-5. The sensor mounting groove 122a may be formed by being concavely recessed upward from the lower end of the lower door cap 122-5.

Another portion, which is different from at least a portion of the distance sensor 400 inserted into the sensor mounting groove 122a, may be disposed in an outer direction of the edge with respect to the first door frame 122. In other words, another portion of the distance sensor 400 may be positioned outside the sensor mounting groove 122a. Particularly, another portion of the distance sensor 400 may be positioned lower than the edge of the first door frame 122. In other words, another portion of the distance sensor 400 may be positioned lower than the lower door cap 122-5.

The distance sensor 400 may include a sensing hole 421 or 1421 provided to transmit light. The sensing hole 421 for emitting detection light and detecting reflected detection light may be formed in the sensor case 420 of the distance sensor 400. The sensing hole 421 may not be inserted into the sensor mounting groove 122a and may be positioned in the outer direction of the edge with respect to the first door frame 122. The sensing hole 421 may be positioned lower than the edge of the first door frame 122. In other words, the sensing hole 421 may be positioned lower than the lower door cap 122-5.

A detailed description of the sensor case 420 and the sensing hole 421 will be described later.

Referring to FIGS. 10 and 11, a detection region R, in which the distance sensor 400 may detect an object, may be positioned within the width, which is with respect to the left and right direction (Y direction), of the refrigerator 1. Particularly, the detection region R of the distance sensor 400 may be positioned in a region including the center portion, which is with respect to the left and right direction (Y direction), of the refrigerator 1. Accordingly, when a user is located within the width, which is with respect to the left and right direction (Y direction), of the refrigerator 1, such as when the user is located in front of the first door 100, when the user is located in front of the second door 200, and when the user is located across in front of the first door 100 and the second door 200, the user can be located in the detection region R. The distance sensor 400 may be configured to detect an object located in front of at least one of the first door 100 and the second door 200. Therefore, the distance sensor 400 may detect the user's approach more efficiently.

Referring to FIGS. 10 and 11, the detection region R of the distance sensor 400 may be formed from a height, which is at least the same height as the lower edge of the first door 100 and the second door 200 in the Z direction when the first door 100 and the second door 200 are in the closed position, to a height located lower than the height of the lower edge thereof. In other words, the detection region R may be formed to detect an object located downward at a predetermined angle with respect to the front side of the first door 100 and the second door 200. The distance sensor 400 may be configured to detect a distance to an object located in a direction inclined downward at the predetermined angle with respect to the front side of the first door 100 or the second door 200 when the first storage compartment 21 is closed. The distance sensor 400 may be configured to detect a distance to an object located downward at the predetermined angle with respect to the front side of the distance sensor 400.

It is required that the refrigerator according to the present disclosure be designed to be provided to users with various physical conditions. As illustrated in FIGS. 10 and 11, when the detection region R is formed from the front regions of the lower edges of the first door 100 and the second door 200 to a direction inclined downward at the predetermined angle, or when the detection region R is formed centered on a region inclined downward at the predetermined angle from the front regions of the lower edges of the first door 100 and the second door 200, the distance sensor 400 may efficiently detect that users with various heights are located within a predetermined distance from the refrigerator 1. In addition, it is possible to prevent interference between the detection region R of the distance sensor 400 and a structure that may be provided on the first door frame 122. Further, detection light emitted from the distance sensor 400 may be prevented from being emitted to an unnecessarily long distance from the refrigerator 1.

With the above-mentioned configuration, the distance sensor 400 may detect the user's approach more efficiently.

The distance sensor 400 may emit detection light in a direction inclined downward at a predetermined angle with respect to the front side of the first door frame 122 so as to detect a distance to an object located in a direction inclined downward with respect to the front side of the first door frame 122. The detection light emitted in a direction inclined downward with respect to the front side of the first door frame 122 may be reflected on an object located lower than the front side of the first door frame 122, and the distance sensor 400 may detect the object.

Meanwhile, when the distance sensor 400 is mounted on the first door 100 as shown in the drawing, the detection region R may be positioned more toward the left side than the right side of the refrigerator 1. That is, a region, in which the distance sensor 400 may detect an object located at the front left side of the refrigerator 1, may be wider than a region in which the distance sensor 400 may detect an object located at the front right side of the refrigerator 1.

A tendency for the detection region R to be positioned to one side of the refrigerator 1 may increase especially when the distance sensor 400 is positioned farther from the second door 200, such as when the distance sensor 400 is adjacent to the center portion, which is with respect to the Y direction, on the lower edge of the first door frame 122. When the tendency is increased, the distance sensor 400 may not efficiently detect an object located in front of the second door 200, or in extreme cases, the distance sensor 400 may not detect an object located in front of the second door 200 at all.

To prevent the above-mentioned difficulty, the distance sensor 400 may emit detection light in a direction inclined toward a direction, in which the second door 200 is located, with respect to the front side of the first door 100 so as to efficiently detect an object located in front of at least one of the first door 100 and the second door 200. That is, the distance sensor 400 may emit detection light in a direction inclined at a predetermined angle to the right side (i.e., the direction in which the front side of the second door 200 is located) with respect to the front side of the first door 100. The detection light may reach and be reflected not only on an object located in front of the first door 100 but also an object in front of the second door 200. Accordingly, the distance sensor 400 may detect the object.

As illustrated in FIG. 9, the distance sensor 400 may be positioned to allow a direction, in which the sensing hole 421 faces, to be inclined with respect to the front and rear direction of the first door 100. Particularly, the distance sensor 400 may be positioned to allow the sensing hole 421 to face a direction inclined downward with respect to the front side of the first door 100. In addition, the distance sensor 400 may be positioned to allow the sensing hole 421 to face a direction inclined in the direction, in which the second door 200 is located, with respect to the front side of the first door 100.

With the above-mentioned configuration, even when the distance sensor 400 is mounted on one of the first door 100 or the second door 200, the distance sensor 400 may efficiently detect a distance to an object located in front of the refrigerator 1, and the number of components, such as the distance sensor 400 provided on the refrigerator 1, may be reduced, thereby reducing manufacturing costs.

A specific structure of the distance sensor 400 for forming the detection region R of the distance sensor 400 as described above will be described later.

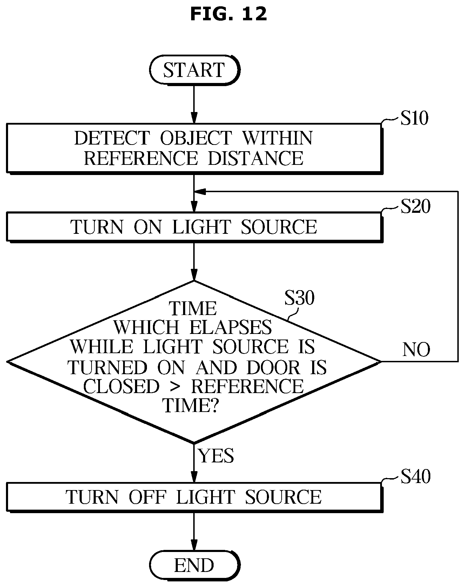

FIG. 12 is a flowchart illustrating a control method of the refrigerator according to one embodiment of the present disclosure.

Referring to FIG. 12, a method for controlling the refrigerator 1 according to one embodiment of the present disclosure may be performed to allow the refrigerator 1 to operate in the light-transmitting mode or the blocking mode using the distance sensor 400.

The control method of the refrigerator 1 may include turning on the light source 24 (S20) based on an object within a reference distance being detected by the distance sensor 400 (S10). The processor 91 may control the light source 24 to emit light based on an output value of the distance sensor 400 being less than or equal to the reference distance. In response to the light source 24 being turned on, light may be emitted to the light-transmitting panels 121 and 211, and the refrigerator 1 may operate in the light-transmitting mode. The output value of the distance sensor 400 means a distance between the distance sensor 400 and the object.

The reference distance may be set to a close enough distance to allow a user to be considered to approach the refrigerator 1 to check the inside of the first storage compartment 21 or the second storage compartment 22. Data on the reference distance may be stored in the memory 92. The reference distance may be set experimentally or empirically.

In order for the distance sensor 400 to detect an object located within the reference distance, the control method of the refrigerator 1 according to one embodiment may further include emitting detection light to the front side of the refrigerator 1 using the distance sensor 400. Based on the distance sensor 400 detecting the detection light reflected by the object located in front of the refrigerator 1, the processor 91 may determine whether the distance from the distance sensor 400 to the object is less than or equal to the reference distance.

Emitting the detection light to the front of the refrigerator 1 using the distance sensor 400 may include emitting the detection light in a direction inclined downward at a predetermined angle with respect to the front side of the first door 100 or the second door 200.

At this time, the light-transmitting mode of the refrigerator 1 may be executed on the premise that the first door 100 and the second door 200 are in the closed state. Therefore, the control method of the refrigerator 1 according to one embodiment may be configured to perform the above-described operations based on the first door 100 and the second door 200 being in the closed state.

For example, the processor 91 may control the distance sensor 400 to emit detection light toward the front of the refrigerator 1 based on the first door 100 and the second door 200 being in the closed state. For example, based on a door opening and closing signal and a signal received from the distance sensor 400, the processor 91 may control the light source 24 to emit light in response to the first door 100 and the second door 200 being in the closed state and an object being located within the reference distance from the distance sensor 400.

Meanwhile, regardless of the signal received from the distance sensor 400, the processor 91 may control the light source 24 to emit light based on the door opening and closing signal indicating that the first door 100 or second door 200 is opened.

Referring to FIG. 12, the control method of the refrigerator 1 may turn off the light source 24 (S40) based on a time, which elapses while the light source 24 is turned on and the first door 100 and the second door 200 are closed, exceeding a reference time (yes in S30). The processor 91 may control the light source 24 not to emit light based on the time, which elapses while the first door 100 and the second door 200 are closed after the light source 24 emits light, exceeding the reference time. That is, in response to the time, which elapses after the refrigerator 1 operates in the light-transmitting mode, exceeding the reference time, the refrigerator 1 may be switched to the blocking mode, thereby reducing unnecessary power consumption.

The reference time may be set to a time expected to be taken for a user to check the inside of the first storage compartment 21 or the second storage compartment 22. Data on the reference time may be stored in the memory 92. The reference time may be set experimentally or empirically.

By the above-mentioned operation, the refrigerator 1 may detect the approach of a user when the user is located within the reference distance from the refrigerator 1 by using the distance sensor 400, and may operate in the light-transmitting mode by turning on the light source 24. In addition, the refrigerator 1 may operate in the blocking mode by turning off the light source 24 in response to the time, which elapses while the light source 24 is turned on and the first storage compartment 21 or the third storage compartment 23 is not opened, exceeding the reference time.

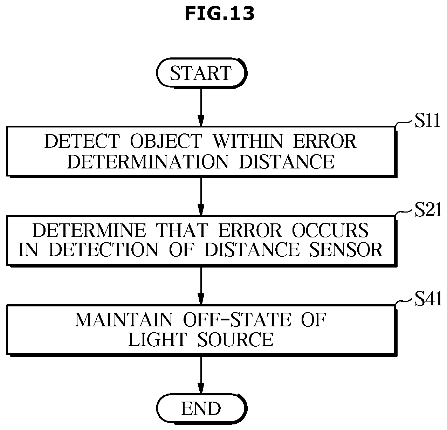

FIG. 13 is a flowchart illustrating a control method of the refrigerator according to one embodiment of the present disclosure.

Referring to FIG. 13, the method of controlling the refrigerator 1 according to one embodiment of the present disclosure may include selecting an operation mode depending on whether an error occurs in the detection of the distance sensor 400.

For example, even when a user does not approach the refrigerator 1, the distance sensor 400 may detect an object located within the reference distance due to a foreign substance that is disposed in a position very close to the sensing hole 421 of the distance sensor 400 or a foreign substance that is disposed on one surface of a cover portion 423a of a light-transmitting cover 423 to be described later. In this case, when the light source 24 emits light even though an error occurs in the detection of the distance sensor 400, unnecessary power consumption may occur and inconvenience may be caused to a user.

The control method of the refrigerator 1 may include determining that an error occurs in the detection of the distance sensor 400 (S21) based on an object within an error determination distance being detected by the distance sensor 400 (S11). The control method of the refrigerator 1 may include maintaining an off-state of the light source 24 (S41) based on the occurrence of the detection error by the distance sensor 400 (S21).

The processor 91 may determine that an error occurs in the detection of the distance sensor 400 based on the distance between the distance sensor 400 and an object (i.e., the output value of the distance sensor 400) being less than or equal to the error determination distance. The processor 91 may control the light source 24 not to emit light based on the first door 100 and the second door 200 being closed and based on an error occurring in the detection of the distance sensor 400.

The error determination distance may be set to a distance smaller than the reference distance. The error determination distance may be set to an excessively small distance in which a user is not considered to approach the refrigerator 1 to check the inside of the first storage compartment 21 or the second storage compartment 22. The error determination distance may be set to an excessively small distance in which an object is considered to be detected due to a foreign substance being stuck to the sensing hole 421 of the distance sensor 400. Data on the error determination distance may be stored in the memory 92. The error determination distance may be set experimentally or empirically.

Particularly, the processor 91 may determine that an error occurs in the detection of the distance sensor 400 and maintain the off-state of the light source 24 under various conditions, such as when an object is detected within the error determination distance immediately after the refrigerator 1 is switched to the blocking mode, or before a predetermined time elapses after the refrigerator 1 is switched to the blocking mode, or when an object is repeatedly/continuously detected within the error determination distance.

However, the control method of the refrigerator 1 described in FIG. 13 is performed on the premise that the first door 100 and the second door 200 are closed. When the first storage compartment 21 or the third storage compartment 23 is opened regardless of whether an error occurs in the detection of the distance sensor 400, the processor 91 may control the light source 24 to emit light to the first storage compartment 21 and the third storage compartment 23.

The control method of the refrigerator 1 described above with reference to FIGS. 12 and 13 is only an example of the control method of the refrigerator according to the present disclosure, and the present disclosure is not limited thereto.

FIG. 14 is a view illustrating a state in which the door of the refrigerator according to one embodiment of the present disclosure is in a light-transmitting mode.

Referring to FIG. 14, the refrigerator 1 according to one embodiment of the present disclosure may operate in the light-transmitting mode under the predetermined condition. Examples of the predetermined condition are as described above.

When the refrigerator 1 operates in the light-transmitting mode, the light source 24 may light into the first storage compartment 21 and the third storage compartment 23, and may emit light to the light-transmitting panels 121 and 221. The light emitted from the light source 24 may pass through the light-transmitting panels 121 and 221 and travel into and out of the first storage compartment 21 and the third storage compartment 23. Therefore, a user can see the inside of the first storage compartment 21 and the third storage compartment 23 through the light-transmitting panels 121 and 221.

A user can check the inside of the first storage compartment 21 through the second light-transmitting panel 221. In addition, a user can check the inside of the third storage compartment 23 through the first light-transmitting panel 121. In addition to food, the water tank 82 of the automatic water supply assembly 80 may also be stored inside the third storage compartment 23. A user can check a water supply status of the water tank 82 through the first light-transmitting panel 121. In addition, as described above, because the door partition 113 is provided to transmit light, a user can also check the inside of the first storage compartment 21 through the first light-transmitting panel 121 and the door partition 113.

As mentioned above, the refrigerator 1 according to one embodiment of the present disclosure may be configured to allow a user to check the inside of the first storage compartment 21 and the third storage compartment 23 without opening the first storage compartment 21 and the third storage compartment 23. Because it is unnecessary for a user to open the door to check the inside of the first storage compartment 21 or the third storage compartment 23, it is possible to prevent cold air from leaking from the first storage compartment 21 or the third storage compartment 23, to improve cooling efficiency, and to reduce power consumption.

In addition, the refrigerator 1 according to one embodiment of the present disclosure may be switched to the light-transmitting mode when the distance sensor 400 detects that a user is located within the reference distance without the user touching the door or operating any other input device.

Sensors of the type that detect an object using detection light, such as the distance sensor 400, have high sensitivity, and thus it may be required to stably fix the distance sensor 400 to the door (the first door 100) to improve detection accuracy.

Hereinafter with reference to FIGS. 15 to 18, the structure of the distance sensor 400 of the refrigerator 1 according to one embodiment of the present disclosure will be described in detail.

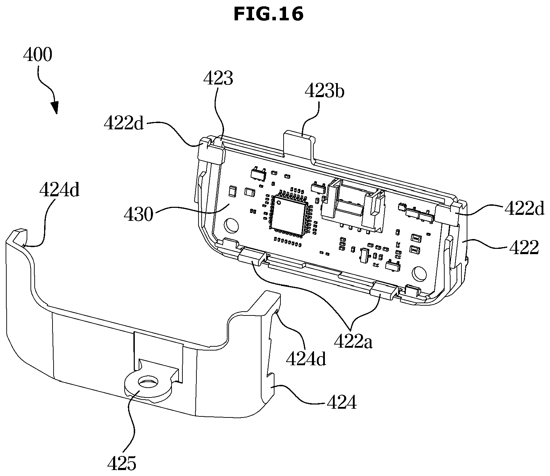

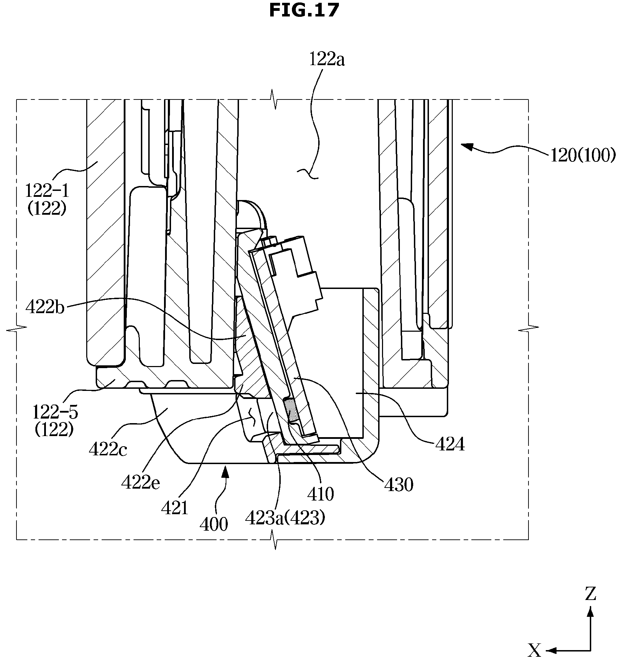

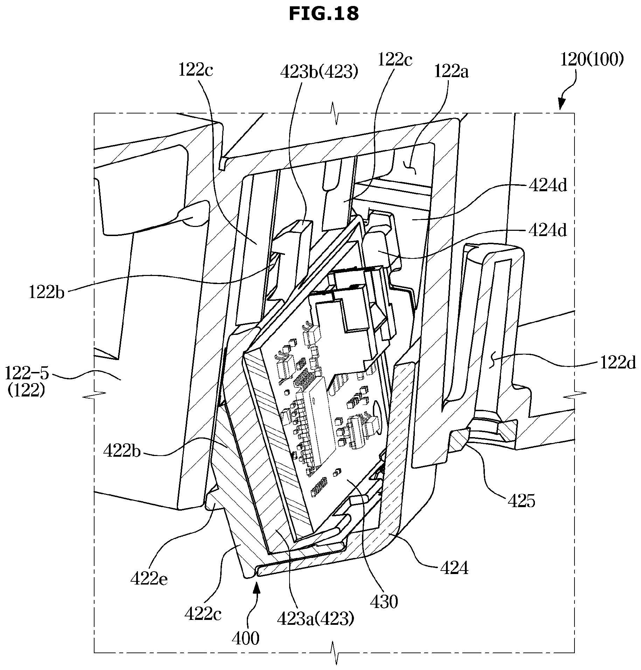

FIG. 15 is an exploded view illustrating a configuration of the distance sensor of the refrigerator according to one embodiment of the present disclosure. FIG. 16 is an exploded view illustrating the configuration of the distance sensor of the refrigerator according to one embodiment of the present disclosure. FIG. 17 is a cross-sectional view illustrating a portion of the configuration of the refrigerator according to one embodiment of the present disclosure. FIG. 18 is a cross-sectional view illustrating a portion of the configuration of the refrigerator according to one embodiment of the present disclosure.

Referring to FIGS. 15 to 18, the distance sensor 400 of the refrigerator 1 according to one embodiment of the present disclosure may include the sensor element 410, and the sensor case 420 provided to accommodate the sensor element 410.

The sensor element 410 may be configured to detect an object located outside the storage compartment 20 and the doors 100, 200, and 300. The sensor element 410 may be configured to output an electrical signal corresponding to the distance to the detected object.

Particularly, the sensor element 410 may be configured to emit detection light and configured to detect at least a portion of the emitted detection light reflected by the object. The sensor element 410 may include a light-emitting element configured to emit detection light, and a light-receiving element configured to detect at least a portion of the detection light reflected by the object. The sensor element 410 may include a lens provided in the direction in which light is emitted.

The sensor case 420 may be mounted on the edge of the first door 100. The sensor case 420 may be mounted on the edge of the first outer door 120. The sensor case 420 may be mounted on the edge of the first door frame 122. Particularly, the sensor case 420 may be mounted on the lower edge of the first door frame 122. In other words, the sensor case 420 may be mounted on the lower door cap 122-5. The sensor case 420 may be coupled to the lower door cap 122-5. The sensor case 420 may form the exterior of the distance sensor 400.

The sensor case 420 may include the sensing hole 421. The sensing hole 421 may be provided on one surface of the sensor case 420 to allow light to pass through. The sensing hole 421 may be formed to be penetrated to allow the detection light, which is emitted from the sensor element 410, to be emitted to the outside of the sensor case 420. The sensing hole 421 may be formed to be penetrated to allow the detection light reflected by the object to be incident on the sensor element 410. For example, the sensing hole 421 may be formed in the front portion of the sensor case 420.

At least a portion of the sensor case 420 may be inserted into the sensor mounting groove 122a. At least another portion of the sensor case 420 may be positioned outside the sensor mounting groove 122a. Particularly, the sensing hole 421 may be positioned outside the sensor mounting groove 122a to prevent the detection light from being interfered with by the first door frame 122.

The sensor element 410 and the sensing hole 421 may be positioned in the outer direction of the edge with respect to the first door frame 122. Particularly, the sensor element 410 and the sensing hole 421 may be positioned lower than the lower edge with respect to the first door frame 122. In other words, the sensor element 410 and the sensing hole 421 may be positioned lower than the lower door cap 122-5.

The sensor element 410 may be positioned in a direction inclined downward with respect to the front side of the first door frame 122. Accordingly, the sensor element 410 may detect a distance to an object positioned in a direction inclined downward with respect to the front side of the first door frame 122.

The sensor element 410 may be positioned in a direction inclined toward the direction in which the second door 200 is located (i.e., toward the right side in the Y direction) with respect to the front side of the first door frame 122. Accordingly, the sensor element 410 may detect an object located in front of at least one of the first door 100 and the second door 200.

Hereinafter the configuration of the sensor case 420 provided to support and accommodate the sensor element 410 is particularly described with an example.

The sensor case 420 may include a case body 422. The sensing hole 421 may be formed on one side of the case body 422. The sensing hole 421 may be formed to penetrate the case body 422. The case body 422 may be provided at the front portion of the sensor case 420. The case body 422 may form at least a portion of the front exterior of the distance sensor 400.

The case body 422 may support the sensor element 410. At least a portion of the case body 422 may be positioned in front of the sensor element 410. The case body 422 may support the light-transmitting cover 423 described later, and may cover and protect at least a portion of the light-transmitting cover 423 described later.

The case body 422 may be arranged to be inclined toward the front of the first door 100 from the right end adjacent to the second door 200 to the left end opposite thereto.

The case body 422 may be mounted on the first door frame 122. At least a portion of the case body 422 may be inserted into the sensor mounting groove 122a.

The case body 422 may include a contact portion 422b that is supported by being in contact with the first door frame 122. The contact portion 422b may be supported by being in contact with the lower door cap 122-5. The contact portion 422b may be inserted into the sensor mounting groove 122a and may be in contact with an inner wall of the sensor mounting groove 122a. By the contact portion 422b, the sensor case 420 may be stably supported by the first door frame 122.

The case body 422 may include an inclined portion 422c that extends at an angle with respect to the up and down direction of the first door frame 122. The inclined portion 422c may extend rearward in the X direction from the first door frame 122 toward the Z direction. From the lower door cap 122-5 to the lower side, the inclined portion 422c may extend obliquely so as to be closer to the rear side. The inclined portion 422c may extend in a direction away from the lower door cap 122-5 in the X direction.

The inclined portion 422c may be positioned to face a direction inclined downward with respect to the front and rear direction of the first door frame 122. The inclined portion 422c may be disposed to be inclined toward the rear side of the first door 100 from the upper end thereof to the lower end thereof.

The inclined portion 422c may be arranged to face a direction that is inclined in the direction, in which the second door 200 is located, with respect to the front and rear direction of the first door frame 122. The inclined portion 422c may be arranged to be inclined toward the front of the first door 100 from the right end adjacent to the second door 200 toward the left end opposite thereto.

The inclined portion 422c may extend outwardly of the first door frame 122. At least a portion of the inclined portion 422c may be positioned outside the edge of the first door frame 122. At least a portion of the inclined portion 422c may be positioned outside the sensor mounting groove 122a. The inclined portion 422c may support the sensor element 410. The sensing hole 421 may be provided in the inclined portion 422c.

For example, the contact portion 422b may extend in the up and down direction (Z direction). The inclined portion 422c may extend from the lower end of the contact portion 422b to an inclined direction with respect to the contact portion 422b.

With the above-mentioned configuration, the sensor element 410 may be positioned so as to face a direction inclined with respect to the front (X direction) of the refrigerator 1 and may be stably supported by the sensor case 420. Further, the detection region R of the sensor element 410 may be prevented from being interfered with by the structure such as the first door 100.

In addition, an available space may be formed in an outer region of the edge of the first door frame 122 as much as the inclined portion 422c is recessed toward the rear side of the first door 100 from one end, which faces the first door frame 122, of the inclined portion 422c to the other end thereof. Accordingly, the efficiency of the space occupied by the distance sensor 400 may be improved.

In addition, when it is assumed that the sensor case 420 does not include the inclined portion 422c, the sensor case 420 may be required to extend longer downwardly from the first door frame 122 in order to prevent interference by structures such as the first door 100. Alternatively, when the sensor case 420 is provided on the inclined portion 422c and the sensing hole 421 is formed on the inclined portion 422c, interference with the structure may be sufficiently prevented even when the length of the sensor case 420 extending downwardly from the first door frame 122 is shortened. Accordingly, the efficiency of the space occupied by the distance sensor 400 mounted on the first door 100 may be improved. In addition, an extent to which the distance sensor 400 is exposed to the front side of the refrigerator 1 may be reduced, and thus the quality of the product's appearance may be improved.

The case body 422 may include a front support protrusion 422e disposed at the front portion of the case body 422 and formed to protrude so as to be in contact with the first door frame 122. For example, the case body 422 may have a shape that protrudes forward from the inclined portion 422c. For example, the front support protrusion 422e may be disposed adjacent to an entrance of the sensor mounting groove 122a. The front support protrusion 422e may be disposed above the sensing hole 421. The front support protrusion 422a may prevent the distance sensor 400 from rotating due to its own weight. By the front support protrusion 422a, the sensor case 420 may be more stably supported on the first door frame 122.

The case body 422 may block the progress of light. The case body 422 may be provided to include a material that does not transmit light. For example, the case body 422 may be provided to include a plastic material.

The sensor case 420 may include the light-transmitting cover 423 disposed between the sensing hole 421 and the sensor element 410 and provided to cover the sensor element 410. The light-transmitting cover 423 may be provided to transmit light so as not to obstruct the progress of the detection light emitted from the sensor element 410 or the progress of the detection light incident on the sensor element 410.

The light-transmitting cover 423 may be provided to include a material having high light transmittance and low light reflection. For example, the light-transmitting cover 423 may be provided to include a polycarbonate (PC) material, but the material forming the light-transmitting cover 423 is not limited thereto.

The light-transmitting cover 423 may cover the sensor element 410 to prevent the sensor element 410 from being damaged by static electricity, external impact, or foreign substances.

The light-transmitting cover 423 may be mounted on the case body 422. Particularly, the light-transmitting cover 423 may be mounted on a back surface of the case body 422 and disposed between the case body 422 and a rear cover 424 described later.

The light-transmitting cover 423 may include the cover portion 423a provided to cover the sensor element 410. The cover portion 423a may cover the front of the sensor element 410. The cover portion 423a may be coupled to the case body 422. At least a portion of the cover portion 423a may be disposed between the sensor element 410 and the sensing hole 421.

At least a portion of the light-transmitting cover 423 may be arranged parallel to the inclined portion 422c of the case body 422. That is, at least a portion of the light-transmitting cover 423 may be arranged inclined with respect to the up and down direction of the first door frame 122. In addition, at least a portion of the light-transmitting cover 423 may be arranged inclined with respect to the front and rear direction of the first door frame 122. Particularly, the cover portion 423a may be arranged parallel to the inclined portion 422c.

A gap having a predetermined thickness may be formed between the cover portion 423a and the sensor element 410. It is appropriate that the gap between the cover portion 423a and the sensor element 410 have a thickness of about 0.5 mm or less, but is not limited thereto.

It is appropriate that the cover portion 423a has a thickness of a predetermined thickness or less to prevent a refractive index from being excessively high. For example, it is appropriate that the thickness of the cover portion 423a is approximately 1 mm or less, but is not limited thereto.

The distance sensor 400 may include a printed circuit board (PCB) 430 on which the sensor element 410 is mounted. In addition to the sensor element 410, various electronic components may be mounted on the printed circuit board 430. The sensor element 410 may be electrically connected to the second wire W3 via the printed circuit board 430.

The printed circuit board 430 may be supported by the sensor case 420. The printed circuit board 430 may be accommodated inside the sensor case 420.

Particularly, the printed circuit board 430 may be coupled to the light-transmitting cover 423. The printed circuit board 430 may be fixed to the light-transmitting cover 423.

In order for the sensor element 410 to be stably supported and maintained in a fixed position relative to the sensor case 420, the printed circuit board 430 may be required to be firmly fixed to the light-transmitting cover 423.

For example, the printed circuit board 430 may be fixed to the light-transmitting cover 423 in a process in which an adhesive, such as epoxy, is applied to the printed circuit board 430 and the printed circuit board 430 adheres to the light-transmitting cover 423, and then the adhesive is dried and hardened.

For example, the printed circuit board 430 may be fastened to the light-transmitting cover 423 by a screw.

The printed circuit board 430 may be arranged parallel to the inclined portion 422c. That is, the printed circuit board 430 may be arranged at an angle with respect to the up and down direction of the first door frame 122. In addition, the printed circuit board 430 may be arranged at an angle with respect to the front and rear direction of the first door frame 122.

The sensor case 420 may include the rear cover 424 provided in a rear portion of the sensor case 420. The rear cover 424 may form the rear exterior of the sensor case 420. The rear cover 424 may cover the rear side of the printed circuit board 430.

The rear cover 424 may support various components such as the sensor element 410, the case body 422, the light-transmitting cover 423, the printed circuit board 430, etc. Particularly, the rear cover 424 may support other components of the distance sensor 400 such as the sensor element 410, the case body 422, the light-transmitting cover 423, and the printed circuit board 430 from the lower side.

The rear cover 424 may be mounted on the first door frame 122. At least a portion of the rear cover 424 may be inserted into the sensor mounting groove 122a.

At least a portion of the rear cover 424 may be in contact with the first door frame 122. At least a portion of the rear cover 424 may be inserted into the sensor mounting groove 122a and may be in contact with the inner wall of the sensor mounting groove 122a. By at least a portion of the rear cover 424, the sensor case 420 may be stably supported on the first door frame 122.

At least a portion of the rear cover 424 in contact with the first door frame 122 may extend in the up and down direction (Z direction).

The rear cover 424 may be coupled to the case body 422. Particularly, the rear cover 424 may be coupled to the rear portion of the case body 422.

The case body 422 may include a first case coupling portion 422a, and the rear cover 424 may include a second case coupling portion 424a coupled to the first case coupling portion 422a. For example, the first case coupling portion 422a may have a hook structure extending toward the rear cover 424, and the second case coupling portion 424a may have a groove structure into which at least a portion of the first case coupling portion 422a is inserted and locked.

Further, the case body 422 may include a first case engaging portion 422d, and the rear cover 424 may include a second case engaging portion 424d engaged with the first case engaging portion 422d. As the first case engaging portion 422d and the second case engaging portion 424d are engaged with each other, the case body 422 and the rear cover 424 may be coupled to each other.

For example, the second case engaging portion 424d may be arranged to allow at least a portion thereof to cover an upper portion of the first case engaging portion 422d. For example, the second case engaging portion 424d may be supported in the up and down direction by the first door frame 122.

However, the present disclosure is not limited thereto, and the rear cover 424 and the case body 422 may be coupled by various structures.

The rear cover 424 may block the progress of light. The rear cover 424 may be provided to include a material that does not transmit light. For example, the rear cover 424 may be configured to include a plastic material.

The sensor case 420 may have a structure, which is locked and coupled to the first door frame 122, so as to be firmly fixed to the first door frame 122. Particularly, the sensor case 420 may be locked and coupled to the lower door cap 122-5.

For example, the light-transmitting cover 423 may include a coupling portion 423b locked and coupled to the first door frame 122. The coupling portion 423b may be locked and coupled to the lower door cap 122-5. The coupling portion 423b may extend from the cover portion 423a to the outside of the case body 422.

Particularly, the coupling portion 423b may extend upward from the cover portion 423a. The coupling portion 423b may not be covered by the case body 422. The coupling portion 423b may be positioned on the upper side of the case body 422. The coupling portion 423b may be positioned on the upper side of the rear cover 424.

The first door frame 122 may include a locking portion 122b provided to be locked and coupled to the coupling portion 423b. Particularly, the coupling portion 423b and the locking portion 122b may be locked and coupled to each other by a hook structure. The coupling portion 423b and the locking portion 122b may be in contact with each other with respect to the up and down direction. The locking portion 122b may support the coupling portion 423b in the up and down direction.

The locking portion 122b may be provided on the lower door cap 122-5. The locking portion 122b may be formed in the sensor mounting groove 122a. The locking portion 122b may be formed to protrude from the inner wall of the sensor mounting groove 122a. Particularly, the locking portion 122b may protrude rearward from the inner wall on the front side of the sensor mounting groove 122a.

However, the present disclosure is not limited thereto, and the coupling portion of the sensor case 420 that is provided to be locked and coupled to the locking portion 122b may be provided in various configurations of the sensor case 420, such as the case body 422.

The first door frame 122 may include an upper support portion 122c provided to support an upper portion of the sensor case 420. The upper support portion 122c may be in contact with the upper portion of the sensor case 420 in the up and down direction.

For example, the upper support portion 122c may support an upper portion of the light-transmitting cover 423. The upper support portion 122c may be in contact with an upper surface of the light-transmitting cover 423 in the up and down direction.

The upper support portion 122c may be provided on the lower door cap 122-5. The upper support portion 122c may be provided on the inner side of the sensor mounting groove 122a. The upper support portion 122c may be formed to protrude from the inner wall of the sensor mounting groove 122a.

Accordingly, the locking portion 122b may restrain the sensor case 420 from moving downward, and the upper support portion 122c may restrain the sensor case 420 from moving upward.

In order that the distance sensor 400 is more firmly fixed to the first door 100, the sensor case 420 may be screw-fastened to the first door frame 122 (refer to FIG. 9).

Particularly, the sensor case 420 may include a fastening portion 425 provided to be screw-fastened to the first door frame 122. A screw hole 122d (refer to FIG. 9) formed at a position corresponding to the fastening portion 425 may be formed in the first door frame 122, and the sensor case 420 may be fastened to the first door frame 122 by a screw penetrating the fastening portion 425 and the screw hole 122d.

The fastening portion 425 may be fastened to the lower door cap 122-5 with a screw. The screw hole 122d may be provided in the lower door cap 122-5.

At a rear position of the sensor element 410, the fastening portion 425 may be fastened to the first door frame 122 with a screw. The fastening portion 425 may extend rearward from the rear cover 424. For example, the fastening portion 425 may be formed integrally with the rear cover 424.

However, the present disclosure is not limited thereto, and the sensor case 420 may be fastened to the first door frame 122 by various configurations.

With the above-mentioned configuration, the distance sensor 400 may be stably fixed to the first door 100. In addition, the detection accuracy of the distance sensor 400 may be improved.

The configuration of the distance sensor 400 described above with reference to FIGS. 15 to 18 is only an example of the distance sensor mounted on the door of the refrigerator according to the present disclosure, and the present disclosure is not limited thereto, and the distance sensor of the refrigerator may be configured in various ways.

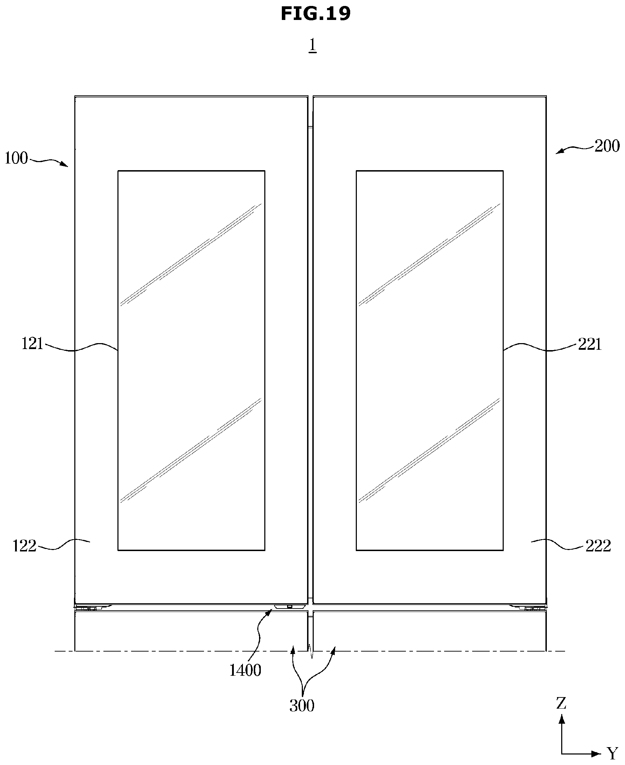

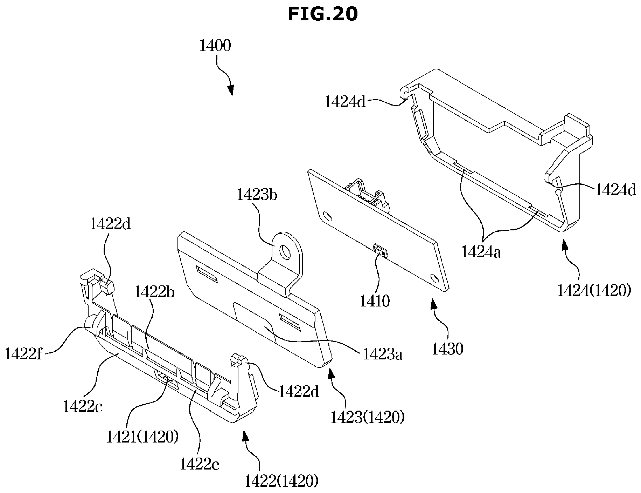

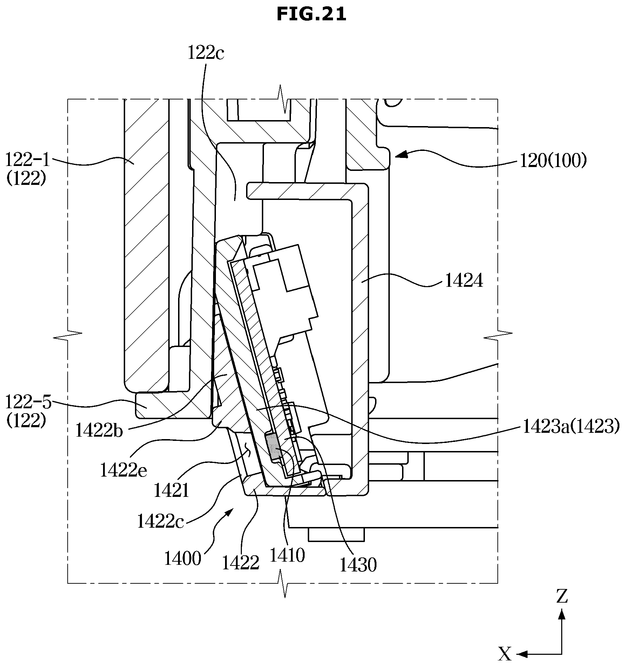

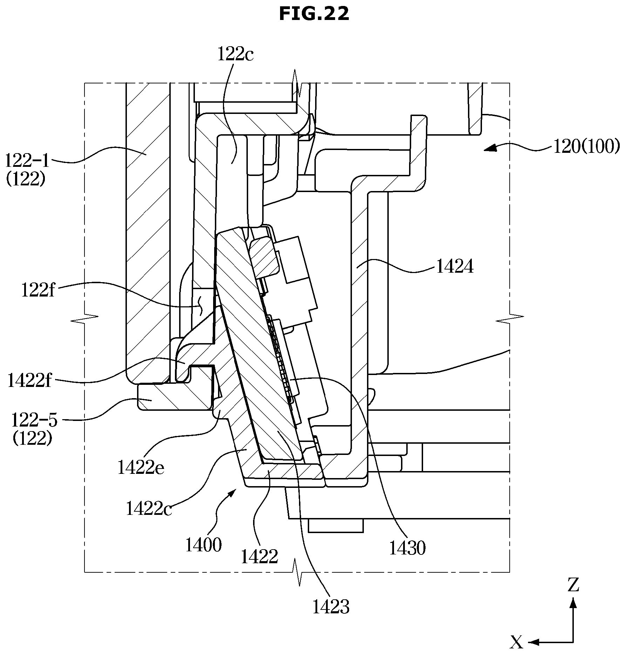

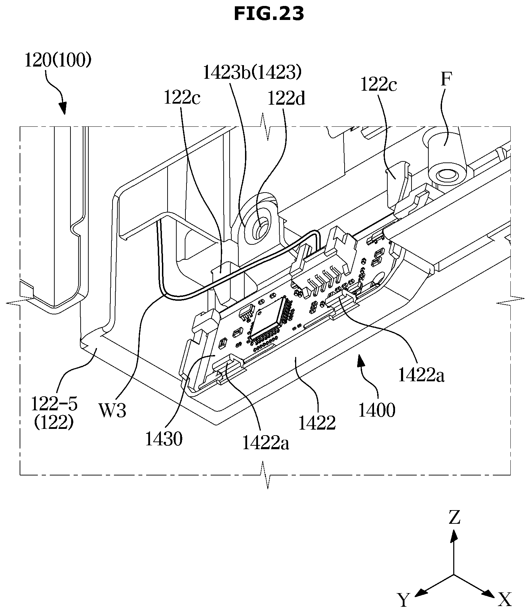

FIG. 19 is an enlarged view of a portion of a refrigerator according to one embodiment of the present disclosure. FIG. 20 is an exploded view illustrating a configuration of a distance sensor of the refrigerator according to one embodiment of the present disclosure. FIG. 21 is a cross-sectional view illustrating a portion of a configuration of the refrigerator according to one embodiment of the present disclosure. FIG. 22 is a cross-sectional view illustrating a portion of the configuration of the refrigerator according to one embodiment of the present disclosure. FIG. 23 is an exploded view illustrating a portion of the configuration of the refrigerator according to one embodiment of the present disclosure, when viewed from the rear.

When describing a refrigerator 1 according to one embodiment of the present disclosure with reference to FIGS. 19 to 23, the same configuration as that illustrated in FIGS. 1 to 18 may be given the same reference numerals and description thereof may be omitted.

Referring to FIGS. 19 to 23, the refrigerator 1 according to one embodiment of the present disclosure may include a distance sensor 1400 positioned at a different location from the distance sensor 400 described in the embodiments of FIGS. 1 to 18.

The distance sensor 1400 may be mounted on an edge of a first door 100 or an edge of a second door 200. The distance sensor 1400 may be mounted on a first door frame 122 or a second door frame 222. Particularly, the distance sensor 1400 may be mounted on a lower edge of the first door frame 122 or a lower edge of the second door frame 222. The distance sensor 1400 may be mounted on a lower door cap 122-5.

The distance sensor 1400 may be disposed adjacent to a center portion of the refrigerator 1 in the Y direction. In this case, a detection region of the distance sensor 1400 may be prevented from being excessively biased to the left side or right side of the center, which is with respect to the Y direction, of the refrigerator 1.

For example, the distance sensor 1400 may be placed adjacent to a side (the right side of the first door 100), which faces the second door 200, of the first door 100. Particularly, the distance sensor 1400 may be disposed adjacent to a right end of the lower edge of the first door frame 122. The distance sensor 1400 may be disposed adjacent to a right end of the lower door cap 122-5.

Alternatively, the distance sensor 1400 may be positioned adjacent to a side (the left side of the second door 200), which faces the first door 100, of the second door 200. Particularly, the distance sensor 1400 may be positioned adjacent to a left end of the lower edge of the second door frame 222.

Hereinafter for convenience of description, one embodiment, in which the distance sensor 1400 is positioned adj acent to the right end of the lower edge of the first door frame 122, will be described with reference to FIGS. 19 to 23, and a description of one embodiment, in which the distance sensor 1400 is mounted on the second door frame 222, may correspond thereto and thus will be omitted.

The distance sensor 1400 may be configured to detect a distance to an object positioned in a direction inclined downward at a predetermined angle with respect to the front side of the first door 100 or the second door 200 when the first storage compartment 21 and the third storage compartment 23 are closed.

The distance sensor 1400 may be configured to emit detection light in a direction inclined downward at the predetermined angle with respect to the front side of the first door 100 or the second door 200, and configured to detect detection light reflected on the object.

The distance sensor 1400 may include a sensor element 1410 configured to detect an object. The sensor element 1410 may be positioned in an outer direction of the edge with respect to the first door frame 122.

The distance sensor 1400 may include a sensor case 1420 in which the sensor element 1410 is accommodated. The sensor case 1420 may be mounted to the first door frame 122. Particularly, the sensor case 1420 may be mounted to the lower door cap 122-5. The sensor case 1420 may be coupled to the lower door cap 122-5.

A sensing hole 1421 may be formed on one side of the sensor case 1420 to allow detection light, which is emitted from the sensor element 1410 to the outside of the sensor case 1420 or reflected, to be incident on the sensor element 1410. The sensing hole 1421 may be provided on one surface of the sensor case 1420 to allow light to pass therethrough. The sensing hole 1421 may be located outside the edge of the first door frame 122. Particularly, the sensing hole 1421 may be located below the lower door cap 122-5.

The sensor element 1410 may be arranged to face a direction, which is inclined downward with respect to the front side of the first door frame 122, so as to detect a distance to an object positioned in the direction that is inclined downward with respect to the front side of the first door frame 122.

The sensing hole 1421 may be arranged to face a direction, which is inclined downward with respect to the front side of the first door frame 122, so as to correspond to the sensor element 1410.

Unlike the sensor element 410 described with reference to FIGS. 1 to 18, the sensor element 1410 may not be arranged in a direction inclined toward the direction (i.e., the right direction) in which the second door 200 is located with respect to the front of the first door frame 122. In other words, the sensor element 1410 may be arranged so as not to be inclined in the Y direction with respect to the X direction in the drawing. Correspondingly, the sensing hole 1421 may be arranged so as not to be inclined in the Y direction with respect to the X direction in the drawing. Even in this case, the distance sensor 1400 may be positioned adjacent to the center of the refrigerator 1 and thus the distance sensor 1400 may detect an object positioned in front of at least one of the first door 100 and the second door 200.

With the above-mentioned configuration, the distance sensor 1400 may be formed to have a detection region that is almost the same as or similar to the detection region described in FIGS. 10 and 11.

Hereinafter a configuration of a sensor case 1420 configured to support and accommodate the sensor element 1410 is particularly described with an example.

The sensor case 1420 may include a case body 1422. The sensing hole 1421 may be formed on one side of the case body 1422. The sensing hole 1421 may be formed to penetrate the case body 1422. The case body 1422 may be provided in a front portion of the sensor case 1420. The case body 1422 may form at least a portion of a front exterior of the distance sensor 1400.

The case body 1422 may be arranged to allow a position in the X direction to be parallel from a left end to a right end.

The case body 1422 may support the sensor element 1410. At least a portion of the case body 1422 may be positioned in front of the sensor element 1410. The case body 1422 may support a light-transmitting cover 1423 and cover and protect at least a portion of the light-transmitting cover 1423 described below.

The case body 1422 may be mounted on the first door frame 122. The case body 1422 may be coupled to a rear portion of the first door frame 122. The case body 1422 may be coupled to a rear portion of the lower door cap 122-5.

The case body 1422 may include a contact portion 1422b supported by being in contact with the first door frame 122. The contact portion 1422b may be in contact with a back surface of the first door frame 122. The contact portion 1422b may be in contact with a back surface of the lower door cap 122-5.

The case body 1422 may include an inclined portion 1422c that extends at an angle with respect to the up and down direction of the first door frame 122. The inclined portion 1422c may extend rearward in the X direction from the first door frame 122 toward the Z direction. From the lower door cap 122-5 to the lower side, the inclined portion 1422c may extend obliquely so as to be closer to the rear side. The inclined portion 1422c may extend in a direction away from the lower door cap 122-5 in the X direction.

The inclined portion 1422c may be positioned to face a direction inclined downward with respect to the front and rear direction of the first door frame 122. The inclined portion 1422c may be disposed to be inclined toward the rear side of the first door 100 from the upper end thereof to the lower end thereof. Unlike the inclined portion 422c in FIGS. 1 to 18, the inclined portion 1422c in FIGS. 19 to 23 may be arranged to allow a position in the X direction to be parallel from the left end to the right end.

The inclined portion 1422c may extend outwardly of the first door frame 122. At least a portion of the inclined portion 1422c may be positioned outside the edge of the first door frame 122. The inclined portion 1422c may support the sensor element 1410. The sensing hole 1421 may be provided in the inclined portion 1422c.

For example, the contact portion 1422b may extend in the up and down direction (Z direction). The inclined portion 1422c may extend from the lower end of the contact portion 1422b to an inclined direction with respect to the contact portion 1422b.

With the above-mentioned configuration, the sensor element 1410 may be positioned so as to face in an inclined direction with respect to the front (X direction) of the refrigerator 1 and may be stably supported by the sensor case 1420. Further, the detection region of the sensor element 1410 may be prevented from being interfered with by the structure such as the first door 100. Further, the efficiency of the space occupied by the distance sensor 1400 may be improved. In addition, an extent to which the distance sensor 1400 is exposed to the front of the refrigerator 1 may be reduced, and thus the quality of the product's appearance may be improved.

The case body 1422 may include a front support protrusion 1422e disposed at the front portion of the case body 1422 and formed to protrude so as to be in contact with the first door frame 122. For example, the case body 1422 may have a shape that protrudes forward from the inclined portion 1422c. The front support protrusion 1422e may be disposed above the sensing hole 1421. The front support protrusion 1422a may prevent the distance sensor 1400 from rotating due to its own weight. By the front support protrusion 1422a, the sensor case 1420 may be more stably supported on the first door frame 122.

The case body 1422 may block the progress of light. The case body 1422 may be provided to include a material that does not transmit light. For example, the case body 1422 may be provided to include a plastic material.

The sensor case 1420 may include the light-transmitting cover 1423 disposed between the sensing hole 1421 and the sensor element 1410 and provided to cover the sensor element 1410. The light-transmitting cover 1423 may be provided to transmit light. The light-transmitting cover 1423 may be provided to include a material having high light transmittance and low light reflection. For example, the light-transmitting cover 1423 may be provided to include a polycarbonate (PC) material, but the material forming the light-transmitting cover 1423 is not limited thereto.

The light-transmitting cover 1423 may cover the sensor element 1410 to prevent the sensor element 1410 from being damaged by static electricity, external impact, or foreign substances.

The light-transmitting cover 1423 may be mounted on the case body 1422. Particularly, the light-transmitting cover 1423 may be mounted on the back surface of the case body 1422 and disposed between the case body 1422 and a rear cover 1424.

The light-transmitting cover 1423 may include a cover portion 1423a provided to cover the sensor element 1410. The cover portion 1423a may cover the front of the sensor element 1410. The cover portion 1423a may be coupled to the case body 1422. At least a portion of the cover portion 1423a may be disposed between the sensor element 1410 and the sensing hole 1421.

At least a portion of the light-transmitting cover 1423 may be arranged parallel to the inclined portion 1422c of the case body 1422. That is, at least a portion of the light-transmitting cover 1423 may be arranged inclined with respect to the up and down direction of the first door frame 122. In addition, at least a portion of the light-transmitting cover 1423 may be arranged inclined with respect to the front and rear direction of the first door frame 122. Particularly, the cover portion 1423a may be arranged parallel to the inclined portion 1422c.

A gap having a predetermined thickness may be formed between the cover portion 1423a and the sensor element 1410. It is appropriate that the gap between the cover portion 1423a and the sensor element 1410 has a thickness of about 0.5 mm or less, but is not limited thereto.

It is appropriate that the cover portion 1423a has a thickness of a predetermined thickness or less to prevent a refractive index from being excessively high. For example, it is appropriate that the thickness of the cover portion 1423a is approximately 1 mm or less, but is not limited thereto.

The light-transmitting cover 1423 may be in contact with the upper support portion 122c of the first door frame 122 in the up and down direction. Particularly, the upper support portion 122c may support an upper portion of the light-transmitting cover 1423. The upper support portion 122c may be in contact with an upper surface of the light-transmitting cover 1423 in the up and down direction.

The distance sensor 1400 may include a printed circuit board (PCB) 1430 on which the sensor element 1410 is mounted. In addition to the sensor element 1410, various electronic components may be mounted on the printed circuit board 1430. The sensor element 1410 may be electrically connected to a second wire W3 via the printed circuit board 1410.

The printed circuit board 1430 may be supported by the sensor case 1420. The printed circuit board 1430 may be accommodated inside the sensor case 1420.

Particularly, the printed circuit board 1430 may be coupled to the light-transmitting cover 1423. The printed circuit board 1430 may be fixed to the light-transmitting cover 1423.

For example, the printed circuit board 1430 may be fixed to the light-transmitting cover 1423 in a process in which an adhesive, such as epoxy, is applied to the printed circuit board 1430 and the printed circuit board 1430 adheres to the light-transmitting cover 1423, and then the adhesive is dried and hardened.

For example, the printed circuit board 1430 may be fastened to the light-transmitting cover 1423 by a screw.

The printed circuit board 1430 may be arranged parallel to the inclined portion 1422c. That is, the printed circuit board 1430 may be arranged at an angle with respect to the up and down direction of the first door frame 122. In addition, the printed circuit board 1430 may be arranged at an angle with respect to the front and rear direction of the first door frame 122.

The sensor case 1420 may include the rear cover 1424 provided in a rear portion of the sensor case 1420. The rear cover 1424 may form the rear exterior of the sensor case 1420. The rear cover 1424 may cover the rear side of the printed circuit board 430.

The rear cover 1424 may support various components such as the sensor element 1410, the case body 1422, the light-transmitting cover 1423, the printed circuit board 1430, etc.

An upper portion of the rear cover 1424 may be in contact with the first door frame 122. The upper portion of the rear cover 1424 may be supported by the first door frame 122.

The rear cover 1424 may be coupled to the case body 1422. Particularly, the rear cover 1424 may be coupled to the rear portion of the case body 1422.

The case body 1422 may include a first case coupling portion 1422a, and the rear cover 1424 may include a second case coupling portion 1424a coupled to the first case coupling portion 1422a. For example, the first case coupling portion 1422a may have a hook structure extending toward the rear cover 1424, and the second case coupling portion 1424a may have a groove structure into which at least a portion of the first case coupling portion 1422a is inserted and locked.

Further, the case body 1422 may include a first case engaging portion 1422d, and the rear cover 1424 may include a second case engaging portion 1424d engaged with the first case engaging portion 1422d. As the first case engaging portion 1422d and the second case engaging portion 1424d are engaged with each other, the case body 1422 and the rear cover 1424 may be coupled to each other. For example, the second case engaging portion 1424d may be arranged to allow at least a portion thereof to cover an upper portion of the first case engaging portion 1422d.

However, the present disclosure is not limited thereto, and the rear cover 1424 and the case body 1422 may be coupled by various structures.

The rear cover 1424 may block the progress of light. The rear cover 1424 may be provided to include a material that does not transmit light. For example, the rear cover 1424 may be configured to include a plastic material.

The sensor case 1420 may have a structure, which is locked and coupled to the first door frame 122, so as to be firmly fixed to the first door frame 122. Particularly, the sensor case 1420 may be locked and coupled to the lower door cap 122-5.

For example, the sensor case 1420 may include a hook 1422f locked and coupled to the first door frame 122. The hook 1422f may be provided to be locked and coupled to the first door frame 122. Particularly, the hook 1422f may be locked and coupled to the first door frame 122 to allow the distance sensor 1400 to be fixed in the front and rear direction with respect to the first door frame 122. The hook 1422f may be locked and coupled to the lower door cap 122-5.

The first door frame 122 may include a locking hole 122f formed to allow the hook 1422f to pass therethrough and be locked and coupled thereto. The hook 1422f may penetrate the locking hole 122f from the rear to the front. For example, a front end of the hook 1422f may have a shape that is bent downward and thus the hook 1422f may be locked and coupled to the first door frame 122. The locking hole 122f may be formed in the lower door cap 122-5.

The hook 1422f may be provided on the case body 1422. The hook 1422f may be formed to protrude forward from the contact portion 1422b or the inclined portion 1422c.

**In** order that the distance sensor 1400 is more firmly fixed to the first door 100, the sensor case 1420 may be screw-fastened to the first door frame 122. The sensor case 1420 may be screw-fastened to the lower door cap 122-5.

Particularly, the sensor case 1420 may include a fastening portion 1423b provided to be screw-fastened to the first door frame 122. A screw hole 122d formed at a position corresponding to the fastening portion 1423b may be formed in the first door frame 122, and the sensor case 1420 may be fastened to the first door frame 122 by a screw that penetrates the fastening portion 1423b and the screw hole 122d. The screw hole 122d may be formed in the lower door cap 122-5.

For example, the fastening portion 1423b may be provided on the light-transmitting cover 1423. The fastening portion 1423b may extend from the cover portion 1423a to the outside of the case body 1422.

Particularly, the fastening portion 1423b may extend upward from the cover portion 1423a. The fastening portion 1423b may not be covered by the case body 1422. The fastening portion 1423b may be positioned on the upper side of the case body 1422. The fastening portion 1423b may be positioned on the upper side of the rear cover 1424.

However, the present disclosure is not limited thereto, and the sensor case 420 may be fastened to the first door frame 122 by various configurations.

For example, a separate fastening portion (not shown) may be additionally provided in the configuration of the case body 1422 or the rear cover 1424 of the sensor case 1420, and may be fastened to the additional fastening structure F of the first door frame 122 illustrated in FIG. 23 (particularly, an additional fastening structure F provided in the lower door cap 122-5).

With the above-mentioned configuration, the distance sensor 1400 may be stably fixed to the first door 100. In addition, the detection accuracy of the distance sensor 1400 may be improved.

The configuration of the distance sensor 1400 described above with reference to FIGS. 19 to 23 is only an example of the distance sensor mounted on the door of the refrigerator according to the present disclosure, and the present disclosure is not limited thereto, and the distance sensor of the refrigerator may be configured in various ways.

In FIGS. 1 to 23, one embodiment in which the distance sensor 400 or 1400 of the refrigerator 1 is mounted on the lower edge of the first door 100 is illustrated, but the present disclosure is not limited thereto. For example, the distance sensor 400 or 1400 may be mounted on the lower edge of the second door 200. Alternatively, the distance sensor 400 or 1400 may be mounted on the right side, which faces the second door 200, of the edge of the first door 100. Alternatively, the distance sensor 400 or 1400 may be mounted on the left side, which faces the first door 100, of the edge of the second door 200. Alternatively, the distance sensor 400 or 1400 may be mounted on the upper edge of the third door 300.

The refrigerator 1 according to one embodiment of the present disclosure may include the main body 10 forming the storage compartment 20; the door 100 configured to open and close the storage compartment 20, the door including the light-transmitting panel 121 configured to transmit light, and the door frame 122 formed along an edge of the light-transmitting panel and provided to support the light-transmitting panel; the light source 24 provided in the storage compartment 20; the distance sensor 400 or 1400 mounted on the door frame and configured to detect a distance to an object located in front of the door in response to the door closing the storage compartment; and the processor 91 electrically connected to the distance sensor and the light source and configured to control the light source to emit light based on an output value of the distance sensor being less than or equal to a reference distance. According to the present disclosure, a user can check the inside of the storage compartment without opening the storage compartment and thus the user convenience may be improved. It is possible to prevent cold air from leaking from the storage compartment, and the cooling efficiency may be improved. Further, a user can check the inside of the storage compartment without touching the door or operating other input devices.

The distance sensor 400 or 1400 may include the sensor element 410 or 1410 configured to output an electrical signal corresponding to a distance to the detected object, and the sensor case 420 or 1420 provided to accommodate the sensor element and mounted on an edge of the door frame. According to the present disclosure, with the fixing structure using the sensor case, the distance sensor may be stably fixed to the door, and the detection accuracy of the distance sensor may be improved.

The sensor element 410 or 1410 may be configured to emit detection light and configured to detect at least a portion of the detection light reflected by the object. The sensor case 420 or 1420 may include the sensing hole 421 or 1421 formed to be penetrated to allow the detection light, which is reflected by the object, to be incident on the sensor element.

The sensor element 410 or 1410 and the sensing hole 421 or 1421 may be disposed in an outer direction of the edge with respect to the door frame. According to the present disclosure, it is possible to prevent the detection region of the sensor element from being interfered with by a structure such as the door.

The sensor case 420 or 1420 may further include the case body 422 or 1422 in which the sensing hole is formed on one side, and the light-transmitting cover 423 or 1423 mounted on the case body, and disposed between the sensing hole and the sensor element so as to cover the sensor element. According to the present disclosure, the light-transmitting cover may be used to prevent the sensor element from being damaged by external impact, foreign substances, static electricity, etc.

The light-transmitting cover 423 may include the cover portion 423a coupled to the case body and provided to cover the sensor element, and the coupling portion 423b extending from the cover portion to an outside of the case body and locked and coupled to the door frame. According to the present disclosure, the distance sensor may be more stably fixed to the door, and the detection accuracy of the distance sensor may be improved.

The case body 422 or 1422 may include the contact portion 422b or 1422b supported by being in contact with the door frame, and the inclined portion 422c or 1422c extending in an outer direction of the door frame from the contact portion and extending at an angle with respect to an up and down direction of the door frame. The sensing hole 421 or 1421 may be disposed on the inclined portion. According to the present disclosure, the distance sensor may be more stably fixed to the door, and the detection accuracy of the distance sensor may be improved. In addition, it is possible to prevent the detection region of the distance sensor from being interfered with by a structure such as the door. In addition, the efficiency of the space occupied by the distance sensor may be improved. In addition, the extent to which the distance sensor is exposed to the front of the refrigerator may be reduced, thereby improving the quality of appearance of the product.

At least a portion of the light-transmitting cover 423 or 1423 may be arranged parallel to the inclined portion 422c or 1422c. According to the present disclosure, it is possible to prevent the detection region of the distance sensor from being interfered with by a structure such as the door. In addition, the efficiency of the space occupied by the distance sensor may be improved. In addition, the extent to which the distance sensor is exposed to the front of the refrigerator may be reduced, thereby improving the quality of appearance of the product.

The refrigerator 1 may further include the printed circuit board 430 or 1430 provided to allow the sensor element to be mounted thereon, and coupled to the light-transmitting cover. The printed circuit board may be arranged parallel to the inclined portion 422c or 1422c. According to the present disclosure, it is possible to prevent the detection region of the distance sensor from being interfered with by a structure such as the door. In addition, the efficiency of the space occupied by the distance sensor may be improved. In addition, the extent to which the distance sensor is exposed to the front of the refrigerator may be reduced, thereby improving the quality of appearance of the product.

The sensor element 410 or 1410 may be arranged to face a direction, which is inclined downward with respect to a front side of the door frame, so as to detect a distance to an object positioned in the direction inclined downward with respect to the front side of the door frame. According to the present disclosure, it is possible to prevent the detection region of the distance sensor from being interfered with by a structure such as the door. In addition, the efficiency of the space occupied by the distance sensor may be improved. In addition, the extent to which the distance sensor is exposed to the front of the refrigerator may be reduced, thereby improving the quality of appearance of the product.

The door may be the first door 100, and the refrigerator 1 may further include the second door 200 configured to open and close the storage compartment and arranged parallel to the first door in a left and right direction. The sensor element 410 may be arranged to face a direction, which is inclined in a direction, in which the second door 200 is located, with respect to the front side of the door frame 122, so as to detect an object located in front of at least one of the first door and the second door. According to the present disclosure, the number of components of the product may be reduced while efficiently detecting the approach of a user.

The sensor case 420 or 1420 may further include the fastening portion 425 or 1423b screw-fastened to the door frame at the rear side of the sensor element. According to the present disclosure, the distance sensor may be more firmly fixed to the door, and the detection accuracy of the distance sensor may be improved.

The sensor case 1420 may include a hook 1422f locked and coupled to the door frame to allow the distance sensor to be fixed in the front and rear direction with respect to the door frame. The door frame 122 may include a locking hole 122f formed to allow the hook to pass therethrough and be locked and coupled thereto. According to the present disclosure, the distance sensor may be stably fixed to the door, and the detection accuracy of the distance sensor may be improved.

The door frame 122 may include the frame bodies 122-1, 122-2, and 122-3 coupled to an edge of the light-transmitting panel 121, and the lower door cap 122-5 coupled to the lower end of the frame body. The distance sensor 400 may be mounted on the lower door cap 122-5.

The distance sensor 400 or 1400 may include the sensor case 420 or 1420 coupled to the lower door cap 122-5. The sensor case 420 or 1420 may include the sensing hole 421 or 1421 provided on one surface of the sensor case 420 or 1420 to allow light to pass therethrough. The sensing hole 421 or 1421 may be disposed under the lower door cap 122-5.

The refrigerator 1 may further include the door opening and closing sensor 60 electrically connected to the processor and configured to detect whether the door is open or closed. The processor may be configured to control the light source so as not to emit light based on a period of time, which elapses while the door is closed after the light source emits light, exceeding a reference time. According to the present disclosure, in response to the refrigerator 1 operating in the light-transmitting mode, and the storage compartment being not opened for a predetermined time, the refrigerator may be switched to the blocking mode to reduce unnecessary power consumption.

The refrigerator 1 may further include the door opening and closing sensor 60 electrically connected to the processor and configured to detect whether the door is open or closed. The processor may be configured to determine that an error occurs in the detection of the distance sensor, based on an output value of the distance sensor being less than or equal to an error determination distance that is less than the reference distance, and configured to control the light source so as not to emit light based on the door being closed and based on an error occurring in the detection of the distance sensor. According to the present disclosure, the refrigerator may select an operation mode of the refrigerator based on whether an error occurs in the detection of the distance sensor, and it is possible to prevent the refrigerator from operating in the light-transmitting mode that is unnecessary.

The refrigerator 1 according to one embodiment of the present disclosure may include the main body 10 forming the storage compartment 20; at least one door 100 or 200 configured to open and close the storage compartment, the at least one door including the light-transmitting panel 121 or 221 configured to transmit light into and out of the storage compartment in response to the at least one door closing the storage compartment; the light source 24 provided in the storage compartment; the distance sensor 400 or 1400 configured to detect a distance to an object located in front of the at least one door 100 or 200 in response to the storage compartment being closed, and mounted on an edge of one door of the at least one door; and the processor 91 electrically connected to the distance sensor and the light source, and configured to control the light source to emit light to the light-transmitting panel based on an output value of the distance sensor being less than or equal to a reference distance. According to the present disclosure, a user can check the inside of the storage compartment without opening the storage compartment and thus the user convenience may be improved. It is possible to prevent cold air from leaking from the storage compartment, and the cooling efficiency may be improved. Further, a user can check the inside of the storage compartment without touching the door or operating other input devices.

The distance sensor 400 or 1400 may be mounted on the lower edge of the one door and configured to detect a distance to an object positioned in a direction inclined downward at a predetermined angle with respect to the front side of the one door in response to the storage compartment being closed. According to the present disclosure, it is possible to prevent the detection region of the distance sensor from being interfered with by a structure such as the door. **In** addition, the efficiency of the space occupied by the distance sensor may be improved. **In** addition, the extent to which the distance sensor is exposed to the front of the refrigerator may be reduced, thereby improving the quality of appearance of the product.

The one door may be the first door 100, and the refrigerator 1 may further include the second door 200 configured to open and close the storage compartment and arranged parallel to the first door in a left and right direction. The distance sensor 400 may be arranged to face a direction, which is inclined in a direction, in which the second door 200 is located, with respect to the front side of the first door 100, so as to detect an object located in front of at least one of the first door and the second door. According to the present disclosure, the number of components of the product may be reduced while efficiently detecting the approach of a user.

The control method of the refrigerator 1 including the door including the light-transmitting panel configured to transmit light into and out of the storage compartment in response to the door closing the storage compartment, the control method of the refrigerator may include emitting detection light to a front side of the refrigerator using the distance sensor mounted on the lower edge of the door in response to the door closing the storage compartment; determining whether a distance from the distance sensor to the object is less than or equal to a reference distance based on the detection light, which is reflected by the object located in front of the refrigerator, being detected by the distance sensor; and emitting light to the light-transmitting panel using a light source provided in the storage compartment based on the distance, which is from the distance sensor to the object, being less than or equal to the reference distance. According to the present disclosure, a user can check the inside of the storage compartment without opening the storage compartment and thus the user convenience may be improved. It is possible to prevent cold air from leaking from the storage compartment, and the cooling efficiency may be improved. Further, a user can check the inside of the storage compartment without touching the door or operating other input devices.

Emitting detection light to the front side of the refrigerator using the distance sensor may include emitting the detection light in a direction inclined downward at a predetermined angle with respect to the front side of the door. According to the present disclosure, it is possible to prevent the detection region of the distance sensor from being interfered with by a structure such as the door. **In** addition, the efficiency of the space occupied by the distance sensor may be improved. In addition, the extent to which the distance sensor is exposed to the front of the refrigerator may be reduced, thereby improving the quality of appearance of the product.

According to the present disclosure, a door of a refrigerator may include a light-transmitting panel, and a storage compartment may be provided with a light source that emits light to the light-transmitting panel. Accordingly, a user can check an inside of the storage compartment without opening the storage compartment.

Further, when a refrigerator operates in a light-transmitting mode, a user can check an inside of a storage compartment without opening the storage compartment, thereby preventing cold air from leaking from the storage compartment and improving the cooling efficiency.

Further, a refrigerator may include a distance sensor configured to detect a distance to an object located in front of a door when the door closes a storage compartment, and the refrigerator may control a light source based on an output value of the distance sensor, thereby allowing a user to check an inside of the storage compartment without touching the door or operating any other input device.

Further, a refrigerator may include a distance sensor to detect the approach of a user when the user is within a predetermined distance.

Further, even when a distance sensor of a refrigerator is installed on only one door, the distance sensor may detect an object within a width direction of the refrigerator, and thus it is possible to efficiently detect the approach of a user while reducing the number of components of the product.

Further, a distance sensor may be positioned at an angle with respect to a front and rear direction of a door, thereby preventing a detection region of the distance sensor from being interfered with by a structure such as the door.

Further, a distance sensor may be arranged at an angle with respect to a front and rear direction of a door, thereby improving the efficiency of a space occupied by the distance sensor.

Further, an extent to which a distance sensor is exposed to a front side of a refrigerator may be reduced, thereby improving the quality of appearance of the product.

Further, with a fixing structure using a sensor case, a distance sensor may be stably fixed to a door.

Further, distance sensor may be stably fixed to a door, thereby improving a detection accuracy of the distance sensor.

Further, in response to a refrigerator operating in a light-transmitting mode, and a storage compartment not being opened for a predetermined time, the refrigerator may be switched to a blocking mode to reduce unnecessary power consumption

Further, a refrigerator may select an operation mode of the refrigerator based on whether an error occurs in detection of a distance sensor.

Meanwhile, the disclosed embodiments may be embodied in the form of a recording medium storing instructions executable by a computer. The instructions may be stored in the form of program code and, when executed by a processor, may generate a program module to perform the operations of the disclosed embodiments. The recording medium may be embodied as a computer-readable recording medium.

The computer- readable recording medium includes all kinds of recording media in which instructions which can be decoded by a computer are stored. For example, there may be a Read Only Memory (ROM), a Random Access Memory (RAM), a magnetic tape, a magnetic disk, a flash memory, and an optical data storage device.

Storage medium readable by machine, may be provided in the form of a non-transitory storage medium. "Non-transitory storage medium" means that the storage medium is a tangible device and does not contain a signal (e.g., electromagnetic wave), and this term includes a case in which data is semi-permanently stored in a storage medium and a case in which data is temporarily stored in a storage medium. For example, "non-transitory storage medium" may include a buffer in which data is temporarily stored.

The method according to the various disclosed embodiments may be provided by being included in a computer program product. Computer program products may be traded between sellers and buyers as commodities. Computer program products are distributed in the form of a device-readable storage medium (e.g., compact disc read only memory (CD-ROM)), or are distributed directly or online (e.g., downloaded or uploaded) between two user devices (e.g., smartphones) through an application store (e.g., Play StoreTM). In the case of online distribution, at least a portion of the computer program product (e.g., downloadable app) may be temporarily stored or created temporarily in a device-readable storage medium such as the manufacturer's server, the application store's server, or the relay server's memory.

While the present disclosure has been particularly described with reference to exemplary embodiments, it should be understood by those of skilled in the art that various changes in form and details may be made without departing from the spirit and scope of the present disclosure.

## Claims

1. A refrigerator comprising:
a main body forming a storage compartment;
a door configured to open and close the storage compartment, the door comprising a light-transmitting panel configured to transmit light, and a door frame formed along an edge of the light-transmitting panel and provided to support the light-transmitting panel;
a light source provided in the storage compartment;
a distance sensor mounted on the door frame and configured to detect a distance to an object located in front of the door in response to the door closing the storage compartment; and
a processor electrically connected to the distance sensor and the light source and configured to control the light source to emit light based on an output value of the distance sensor being less than or equal to a reference distance.

2. The refrigerator of claim 1, wherein
the distance sensor comprises: a sensor element configured to output an electrical signal corresponding to a distance to the detected object; and a sensor case provided to accommodate the sensor element and mounted on an edge of the door frame.

3. The refrigerator of claim 2, wherein
the sensor element is configured to emit detection light and configured to detect at least a portion of the detection light reflected by the object,
wherein the sensor case comprises a sensing hole formed to be penetrated to allow the detection light, which is reflected by the object, to be incident on the sensor element.

4. The refrigerator of claim 3, wherein
the sensor element and the sensing hole are disposed in an outer direction of the edge with respect to the door frame.

5. The refrigerator of claim 3, wherein
the sensor case further comprises:
a case body in which the sensing hole is formed on one side; and
a light-transmitting cover mounted on the case body, and disposed between the sensing hole and the sensor element so as to cover the sensor element.

6. The refrigerator of claim 5, wherein
the light-transmitting cover comprises: a cover portion coupled to the case body and provided to cover the sensor element; and a coupling portion extending from the cover portion to an outside of the case body and locked and coupled to the door frame.

7. The refrigerator of claim 5, wherein
the case body comprises:
a contact portion supported by being in contact with the door frame; and
an inclined portion extending in an outer direction of the door frame from the contact portion and extending at an angle with respect to an up and down direction of the door frame,
wherein the sensing hole is disposed on the inclined portion.

8. The refrigerator of claim 7, wherein
at least a portion of the light-transmitting cover is arranged parallel to the inclined portion.

9. The refrigerator of claim 7, further comprising:
a printed circuit board provided to allow the sensor element to be mounted thereon, and coupled to the light-transmitting cover,
wherein the printed circuit board is arranged parallel to the inclined portion.

10. The refrigerator of claim 3, wherein
the sensor element is arranged to face a direction, which is inclined downward with respect to a front side of the door frame, so as to detect a distance to an object positioned in the direction inclined downward with respect to the front side of the door frame.

11. The refrigerator of claim 3, wherein
the door is a first door,
wherein the refrigerator further comprises a second door configured to open and close the storage compartment and arranged parallel to the first door in a left and right direction,
wherein the sensor element is arranged to face a direction, which is inclined in a direction, in which the second door is located, with respect to the front side of the door frame, so as to detect an object located in front of at least one of the first door and the second door.

12. The refrigerator of claim 1, wherein
the door frame comprises: a frame body coupled to an edge of the light-transmitting panel; and a lower door cap coupled to a lower end of the frame body,
wherein the distance sensor is mounted on the lower door cap.

13. The refrigerator of claim 12, wherein
the distance sensor comprises a sensor case coupled to the lower door cap, wherein the sensor case comprises a sensing hole provided on one surface of the sensor case to allow light to pass therethrough,
wherein the sensing hole is disposed under the lower door cap.

14. The refrigerator of claim 1, further comprising:
a door opening and closing sensor electrically connected to the processor and configured to detect whether the door is open or closed,
wherein the processor is configured to control the light source so as not to emit light based on a period of time, which elapses while the door is closed after the light source emits light, exceeding a reference time.

15. The refrigerator of claim 1, further comprising:
a door opening and closing sensor electrically connected to the processor and configured to detect whether the door is open or closed,
wherein the processor is configured to determine that an error occurs in the detection of the distance sensor, based on an output value of the distance sensor being less than or equal to an error determination distance that is less than the reference distance; and configured to control the light source so as not to emit light based on the door being closed and based on an error occurring in the detection of the distance sensor.
